# EUROPÄISCHE PATENTSCHRIFT

(11) **EP 3 957 383 B1**
(45) Veröffentlichungstag und Bekanntmachung des Hinweises auf die Patenterteilung: **26.02.2025**
(21) Anmeldenummer: 21191797.6
(22) Anmeldetag: 01.07.2016
(51) Int. Cl.: B01D 46/52

(54) **FILTERMODUL ZUM ABSCHEIDEN VON VERUNREINIGUNGEN AUS EINEM ROHGASSTROM**
FILTER MODULE FOR SEPARATING IMPURITIES FROM A RAW GAS FLOW
MODULE FILTRANT SERVANT À SÉPARER DES IMPURETÉS D'UN FLUX DE GAZ BRUT

(30) Priorität: 24.07.2015 DE 102015112113
(43) Veröffentlichungstag der Anmeldung: 23.02.2022
(62) Teilanmeldung aus: 16738701.8
(73) Patentinhaber: Dürr Systems AG, 74321 Bietigheim-Bissingen (DE)
(72) Erfinder: Seyboth, Oliver, 71282 Hemmingen (DE); Schöttle, Frank, 70839 Gerlingen (DE)
(74) Vertreter: RPK Patentanwälte Reinhardt und Kaufmann Partnerschaft mbB

(56) Entgegenhaltungen:
- EP-A1- 2 532 409
- DE-A1- 2 615 884
- DE-U1- 202005 003 046
- US-A- 2 681 155

## Beschreibung

### Technisches Gebiet

Die Erfindung betrifft ein Filtermodul zum Abscheiden von Verunreinigungen aus einem Verunreinigungen enthaltenden Rohgasstrom, insbesondere zur Verwendung in einer Lackieranlage zum Lackieren von Werkstücken, insbesondere Fahrzeugkarosserien.

### Stand der Technik

Die DE 102011050915 A1 offenbart ein Papiergelegefiltermodul mit einem äußeren Rahmen und einem dreidimensional angeordneten Papiergelegefilter mit zwischen einzelnen Abschnitten des Papiergelegefilters angeordneten Abstandshaltern. Die Verwendung des Papiergelegefilters vergrößert die wirksame Fläche des Filtermoduls oder eines Farbnebelabscheidemoduls.

Weiter offenbart die DE 102011050915 A1 ein Papiergelegefiltermodul mit einem äußeren Rahmen und einem in Form einer mehrfach gefalteten Bahn dreidimensional angeordneten Papiergelegefilter. Dabei ist der Papiergelegefilter im Bereich von Wendepunkten der mehrfach gefalteten Bahn, den sogenannten Bugen, am Rahmen fixiert. Auch bei dieser Ausführungsform ist die Vergrößerung der wirksamen Fläche des Filtermoduls durch die Verwendung eines Papiergelegefilters erreicht.

Die DE 2615884 A1 offenbart ein Filtermodul mit einer zick-zack-förmigen Filtermatte, die einem sie in zick-zack-förmiger Bahn haltenden, vom Lüfter abnehmbaren Käfig auswechselbar angeordnet ist. Die Filtermatte ragt an den Seiten des Käfigs über den Käfig, so dass sie sich selbst am gesamten Umfang des Käfigs im Leitungsstück abdichtet und die Förderluft die Filtermatte durchströmen muss.

Zur Gewährleistung eines Abstands zwischen den einander zugewandten Seiten der mehrfach gefalteten Papiergelegefilterbahn sind keine Abstandshalter erforderlich, vielmehr wird ein solcher Abstand durch die Fixierung der Papiergelegefilterbahn mit geeigneten Fixierungsmitteln im Bereich von sich bei der Faltung ergebenden Bugen in regelmäßigen Abständen am Rahmen erreicht.

### Offenbarung der Erfindung

Die Aufgabe der Erfindung ist es, ein Filtermodul mit einem Filterstrukturkörper zu schaffen, welcher bei einer großen Filterfläche eine geringe Zahl von Einzelteilen umfasst und einfach zu montieren ist.

Die Aufgabe wird durch die Merkmale des unabhängigen Anspruchs gelöst. Günstige Ausgestaltungen und Vorteile der Erfindung ergeben sich aus den weiteren Ansprüchen, der Beschreibung und den Zeichnungen.

Es wird ein Filtermodul zum Abscheiden von Verunreinigungen aus einem Verunreinigungen enthaltenden Rohgasstrom vorgeschlagen, welches einen dreidimensionalen Filterstrukturkörper umfasst, durch welchen der Rohgasstrom leitbar ist, und welcher eine in Segmente unterteilte Stützstruktur und eine darauf angeordnete, insbesondere fixierte, Filterlage aufweist. Insbesondere kann der Filterstrukturkörper eine in eigensteife Segmente unterteilte eigensteife Stützstruktur und eine darauf angeordnete, insbesondere fixierte, Filterlage aufweisen.

Wenigstens zwei der Segmente sind über einen Verbindungsbereich zusammenhängend ausgebildet. Das Filtermodul umfasst weiterhin einen äußeren Rahmen zur Aufnahme des Filterstrukturkörpers. Dabei sind die Segmente mit der darauf angeordneten Filterlage mit ihren Segmentflachseiten in einer Stapelrichtung aufeinanderfolgend angeordnet.

Der Filterstrukturkörper ist kraftschlüssig in dem äußeren Rahmen fixiert.

Die Segmente weisen quer zu den Segmentflachseiten wegklappbare Abstands- und/oder Versteifungselemente und/oder aus den Segmentflachseiten herausklappbare Abstands- und/oder Versteifungselemente auf.

Mit Hilfe der herausklappbaren Abstands- und/oder Versteifungselemente, welche innerhalb der Segmentflachseiten gegenüberliegend der Filterlage angeordnet sind, können die einzelnen Segmente auf gegenseitigem Abstand gehalten werden. Insbesondere kann der Filterstrukturkörper dadurch entscheidend versteift werden, so dass die einzelnen Segmente in ihrer Position in dem äußeren Rahmen fixiert gehalten werden können. Vorteilhaft können Abstands- und/oder Versteifungselemente in den Segmentflachseiten und/oder den Randbereichen der Segmentflachseiten vorgeprägt und/oder vorgestanzt sein. Weiter können die Segmente durch die wegklappbaren Abstands- und/oder Versteifungselemente, welche auf dieselbe Seite wie die Filterlage weisen, auch auf Abstand gehalten werden sowie der gesamte Filterstrukturkörper im äußeren Rahmen versteift und fixiert wird. Außerdem schließen die wegklappbaren Abstands- und/oder Versteifungselemente beim Einbau des Filterstrukturkörpers an einem Rand bei einem bestimmungsgemäßen Einbau in den äußeren Rahmen eines Filtermoduls so mit dem äußeren Rahmen ab, dass eine rohgasseitige Öffnung des Filtermoduls von einer reingasseitigen Öffnung des äußeren Rahmens gasdicht getrennt ist und die Filterlage von dem Rohgas quer anströmbar ist.

Der Aufbau des Filtermoduls umfasst in einer vorteilhaften Ausführung nur zwei Komponenten, den Filterstrukturkörper sowie den äußeren Rahmen, was im Vergleich zum Stand der Technik eine erhebliche Reduzierung an Bauteilen darstellt und daher, insbesondere bei einer globalen Verwendung der Filtermodule, einen deutlichen Vorteil im Hinblick auf den Logistikaufwand und eine Fehleranfälligkeit beim Zusammenbau bietet. In einer günstigen Ausgestaltung können von einem zentralen Versandort demzufolge lediglich zwei Komponenten, nämlich beispielsweise Filterstrukturkörper und äußerer Rahmen, an den Bestimmungsort gesendet und vor Ort zusammengebaut werden. Zudem können die verwendeten Komponenten einfach zusammengebaut werden. Auch der Austausch von Komponenten im Wartungsfall gestaltet sich so relativ einfach, da nur der Filterstrukturkörper auszutauschen ist.

Vorteilhaft könnte dabei sogar der Filterstrukturkörper mit optional noch nicht zu U-Profilen oder V-Profilen aufgestellten Segmenten als flache oder bandförmig als eine Rolle aufgewickelte Stützstruktur mit Filterlage an den Bestimmungsort zur Endmontage des Filtermoduls transportiert werden. Dadurch kann diese erst bei der Endmontage von der Rolle abgewickelt und mit Aufstellen der Segmente in U-Profil - oder V-Profil - Form als Filterstrukturkörper fertiggestellt werden, der dann in den äußeren Rahmen eingebaut werden kann.

Durch die Fixierung des Filterstrukturkörpers kraftschlüssig in dem äußeren Rahmen kann vorteilhaft der Filterstrukturkörper verbindungsmittelfrei in dem äußeren Rahmen fixiert sein.

Bevorzugt ist der Filterstrukturkörper derart in den äußeren Rahmen eingesetzt, dass dieser den Filterstrukturkörper in Form eines Presssitzes aufnimmt. Aufgrund des umlaufenden Presssitzes zwischen äußerem Rahmen und Filterstrukturkörper kann optional vorteilhafterweise auf eine zusätzliche formschlüssige Verbindung zwischen beiden Komponenten zur Fixierung verzichtet werden.

Dann kann allein das Verschließen des äußeren Rahmens für eine ausreichende Halterung und Fixierung des Innenaufbaus sorgen. Etwaige unerwünschte Undichtigkeiten zwischen Filterstrukturkörper und äußerem Rahmen können im Betrieb des Filtermoduls verringert oder vollständig beseitigt werden, da sich diese durch Ablagerungen aus dem Rohgasstrom zusetzen können.

Ein günstiger Filterstrukturkörper für ein erfindungsgemäßes Filtermodul zum Abscheiden von Verunreinigungen aus einem Verunreinigungen enthaltenden Rohgasstrom weist eine in Segmente unterteilte Stützstruktur und eine darauf angeordnete, insbesondere fixierte, Filterlage auf. Insbesondere kann der Filterstrukturkörper eine in eigensteife Segmente unterteilte Filterstruktur aufweisen, die eine eigensteife Stützstruktur und eine darauf angeordnete, insbesondere fixierte, Filterlage aufweist.

Dabei sind die Segmente zum Einbau in einen Rahmen mit der darauf angeordneten Filterlage in einer Stapelrichtung mit ihren Segmentflachseiten aufeinanderfolgend anordenbar. Vorteilhaft liegen in den Segmenten Stützstruktur und Filterlage flächig, vorzugsweise großflächig, insbesondere ganzflächig, aneinander.

Dabei können zwei oder mehr der Segmente zusammenhängend ausgebildet sein. Optional können zwei oder mehr der Segmente auch Einzelelemente sein, die nachträglich miteinander verbunden werden können.

Der Filterstrukturkörper kann vorteilhaft eine in Abhängigkeit von den Eigenschaften der abzuscheidenden Verunreinigungen und/oder Partikel des Rohgasstroms wählbare Filterlage auf einer Stützstruktur, vorzugsweise aus Karton, aufweisen, welche beispielsweise durch Klammern, Nähen, Nieten, Kleben oder dergleichen, auf der Stützstruktur fixiert ist. Diese Stützstruktur, welche in einzelne Segmente unterteilt ist, kann vorzugsweise durch einfaches Falten in eine derartige Geometrie gebracht werden, so dass die wirksame Filterfläche im Vergleich zu einer senkrechten Anströmung der Filterlage deutlich vergrößert ist. Dazu sind die einzelnen Segmente aufgestellt und, beispielsweise in Form von U-Profilen, parallel mit ihren Segmentflachseiten nebeneinander in der Stapelrichtung mit einer Stirnfläche entgegen dem anströmenden Rohgas angeordnet. Vorteilhaft sind die Segmentflachseiten bei fertig montiertem Filtermodul zumindest teilweise durchströmbar, so dass eine große Filterfläche verfügbar ist.

Dieser so gestaltete Filterstrukturkörper, im Folgenden auch Innenaufbau genannt, kann bestimmungsgemäß in einen äußeren Rahmen, welcher das Gehäuse eines Filtermoduls darstellt, montiert werden, so dass eine möglichst effektive Abscheidung von Verunreinigungen aus dem Rohgasstrom möglich ist.

Mit Hilfe einer Presspassung zwischen den Kontaktflächen des Filterstrukturkörpers und des äußeren Rahmens kann optional bereits bei der Montage sichergestellt werden, dass der Rohgasstrom einen vorgegebenen Weg durch das Filtermodul nimmt.

Alternativ oder zusätzlich zu einer Presspassung kann ein Abdichtelement in Form einer Dichtmasse und/oder eines Klebebandes verwendet werden, um die Übergangsbereiche zwischen Filterstrukturkörper und äußerem Rahmen abzudichten.

Etwaige unerwünschte Undichtigkeiten zwischen Filterstrukturkörper und äußerem Rahmen können während des Betriebs des Filtermoduls durch Ablagerungen aus dem Rohgasstrom an diesen Undichtigkeiten verringert oder vollständig beseitigt werden.

Auf diese Weise wird so der Aufbau eines Filterstrukturkörpers beschrieben, bei dem als Filterlage unterschiedliche filternde Abscheider, insbesondere Faserfilter wie beispielsweise Wirrfasermatten, Papier- oder Kunststoffvliese, aber auch Papiergelegematten oder dergleichen zum Einsatz kommen können. Dabei ist der Zusammenbau des Filterstrukturkörpers einfach und außerhalb des äußeren Rahmens des Filtermoduls durchführbar. Zudem ist die freie Filterfläche des Filtermoduls dadurch vergrößert, dass möglichst wenige oder optional keine separaten Stütz- bzw. Haltestrukturen des Filtermoduls benötigt werden, welche die Filterfläche verdecken oder verblocken könnten. Außerdem können vorzugsweise recyclingfähige Materialien, welche relativ leicht entsorgbar sind und welche beispielsweise weitgehend rückstandsfrei verbrannt werden können, eingesetzt werden.

Es hat sich gezeigt, dass die Anpassung des Verhältnisses von Filterfläche zu rohgasseitigem Strömungsquerschnitt, welcher den anströmseitigen Raum vor dem Filterstrukturkörper darstellt, abhängig von den Eigenschaften der zu filternden Verunreinigungen und/oder Partikel und damit beispielsweise abhängig von der Art des zerstäubten Lacktyps beim Einsatz in einer Lackieranlage, der verwendeten Applikation sowie der vorherrschenden Luftkonditionen, sich vorteilhaft auf die Filterstandzeit auswirken kann. Daher ist es vorteilhaft, bei der erfindungsgemäßen Lösung dieses Verhältnis möglichst einfach an die Eigenschaften der abzuscheidenden Partikel adaptieren zu können. Ebenso ist es vorteilhaft, den Aufbau, die Art und die Anzahl der verwendeten Filterlagen möglichst einfach an die Eigenschaften der abzuscheidenden Partikel adaptieren zu können.

Im Folgenden werden daher verschiedene Ausführungsformen von Filterstrukturkörpern beschrieben, welche aber allesamt auf dem gleichen Konzept basieren und zudem in gleicher Weise zusammengebaut werden. Es handelt sich daher um verschiedene Varianten eines Filterstrukturkörpers, die eine flexible Anpassung der wichtigsten Filtereigenschaften an die abzuscheidenden Partikel ermöglichen.

Wesentliche Vorteile sind so zum einen in einem flexiblen Aufbau des Filterstrukturkörpers, wodurch der Einsatz verschiedenster Faserfilter und/oder Papiergelegefilter als Filterlage möglich ist. Eine oder mehrere Filterlagen können auf der Stützstruktur montiert/fixiert werden, welche dann in einfacher Weise zu dem Filterstrukturkörper gefaltet werden kann. Jede Filterlage kann aus ein oder mehreren Filterlagenschichten bestehen. Mehrere Filterstrukturkörper lassen sich so beispielsweise in flexibler Weise hintereinanderschalten. Eine Anpassung sowohl des rohgasseitigen als auch des reingasseitigen Strömungsquerschnitts ist ohne Änderung des Aufbaus möglich. Dafür ist beispielsweise lediglich die Ausstanzung eines Kartons als Stützstruktur anzupassen.

Bei der Verwendung beispielsweise eines Kartons als Stützstruktur entsteht kaum Abfall bei der Produktion der Stützstruktur, da Ausstanzungen zur Versteifung des Filtermoduls verwendet werden können. So lassen sich geringe Stückkosten bei der Fertigung des Filtermoduls erreichen. Die Vormontage des Filterstrukturkörpers ist außerhalb des äußeren Rahmens des Filtermoduls möglich, wodurch ein einfacher Zusammenbau, beispielsweise direkt am Verwendungsort, ermöglicht wird. Ebenso kann auch ein einfacher Austausch von Filterstrukturkörpern vor Ort erfolgen.

Rohgasseitig ist in einer günstigen Ausgestaltung keine (zusätzliche) Halterung oder Versteifung nötig. Dadurch wird eine möglichst große freie Anströmung der Filteroberfläche erreicht.

Verschiedene Varianten des Filterstrukturkörpers können auf die gleiche Weise zusammengebaut werden. Eine bevorzugte Anströmrichtung der Filterlage kann bei Bedarf berücksichtigt werden. Außerdem ist eine Erweiterung des Filtermoduls mit einem oder mehreren identischen Filterstrukturkörpern möglich.

Günstig kann auch eine Mehrzahl von aufeinanderfolgenden Segmenten mittels eines Verbindungsbereichs zusammenhängend ausgebildet sein, die jeweils in Zick-Zack-Form hin- und hergehend in Form von U-Profilen oder V-Profilen umgeklappt sind. Auf diese Weise sind die U-Profile oder V-Profile nebeneinander liegend angeordnet, so dass sie strömungsmäßig sowohl mit einer Stirnfläche in Strömungsrichtung als auch entgegen der Strömungsrichtung ausgerichtet sein können. Zweckmäßig ist es dabei, wenn die Stützstruktur im Verbindungsbereich zweier Segmente, der als Stirnfläche der Strömungsrichtung entgegensteht, mit kleineren Durchbrüchen oder Öffnungen versehen ist, als die Stützstruktur eines Verbindungsbereichs, der stromabwärts angeordnet ist, um so eine günstige Filter- und Abscheidewirkung zu erzielen. Durch die Anordnung der Segmente in Form von U-Profilen oder V-Profilen wird im Vergleich zur Verwendung einer senkrecht angeströmten Filterlage die wirksame Filteroberfläche deutlich vergrößert und damit die Effektivität sowie die Standzeit des Filterstrukturkörpers signifikant erhöht.

Die Filterlage ist bevorzugt auf einer Seite der Stützstruktur angeordnet. Nach dem Knicken und/oder Falten der Stützstruktur in U-Form oder in V-Form und dem Einbau des Filterstrukturkörpers in den äußeren Rahmen ist die Filterlage dann abwechselnd an einer Innenseite und an einer Außenseite des geknickten und/oder gefalteten Verbindungsbereichs der Stützstruktur angeordnet.

Gemäß einer vorteilhaften Ausgestaltung kann vorgesehen sein, dass zueinander weisende Abstands- und/oder Versteifungselemente benachbarter Segmente wenigstens teilweise miteinander verbindbar, insbesondere verrastbar oder verklemmbar, sind. Eine weitere Möglichkeit zur Beabstandung und Versteifung der einzelnen Segmente zueinander besteht darin, die Abstands- und/oder Versteifungselemente miteinander verbindbar, insbesondere verrastbar oder verklemmbar auszuführen.

Dadurch lässt sich auch der Zusammenbau des Filterstrukturkörpers durch Falten der Stützstruktur beispielweise einfacher gestalten, da die Segmente während des Aufrichtens der Segmente aus der ursprünglich flachen Stützstruktur jeweils mittels der Abstands- und/oder Versteifungselemente gegenseitig verbunden werden können und so in der ausgestellten Position von sich aus verbleiben, bis der gesamte Filterstrukturkörper so gebildet ist, dass er in dem äußeren Rahmen montiert werden kann.

Dabei kann gemäß einer vorteilhaften Ausgestaltung vorgesehen sein, dass zueinander weisende Abstands- und/oder Versteifungselemente benachbarter Segmente wenigstens ein Rastelement aufweisen, welches in einem bestimmungsgemäß herausgeklappten Zustand mit einem Rastgegenelement eines gegenüber liegenden Abstands- und/oder Versteifungselementes eines benachbarten Segments verrastbar ist. Das Vorsehen von Rastelementen und Rastgegenelementen in den Abstands- und/oder Versteifungselemente ermöglicht ein Verbinden der einzelnen Segmente, bei dem optional auf zusätzliche Verbindungsmittel verzichtet werden kann, was einen signifikanten logistischen Vorteil beim Zusammenbau des Filterstrukturkörpers bedeutet. Außerdem wird so auch das Risiko minimiert, dass die Rastelemente im Lauf der Lebensdauer des Filterstrukturkörpers sich lösen und abfallen, was möglicherweise eine Beeinträchtigung der weiterführenden Prozesse auf der Reingasseite zur Folge haben könnte.

Gemäß einer vorteilhaften Ausgestaltung kann vorgesehen sein, dass die Filterlage mit einer strömungsmäßig bevorzugten Oberflächenausrichtung ausgebildet ist. Eine strömungsmäßig bevorzugte Oberflächenausrichtung ist dann gegeben, wenn eine Vorzugsrichtung für eine besonders effiziente Abscheidung und/oder Durchströmung gegeben ist.

In einer vorteilhaften Ausgestaltung kann die Oberflächenausrichtung beispielweise bewirken, dass der Rohgasstrom die Filterlage schräg unter einem Winkel zur Filterlagenoberfläche und nicht senkrecht durchströmt, was effektiv einer Erhöhung der Filterlagendicke entspricht und eine verbesserte Filterwirkung zur Folge hat. Abhängig vom Aufbau der verwendeten Filterlage kann es zur Verbesserung der Filtereigenschaften des Filterstrukturkörpers wie Abscheiderate und Aufnahmekapazität durchaus vorteilhaft sein, diese beispielsweise immer im Gegenstrom zu der Oberflächenausrichtung der Filterlage anzuströmen. Dabei kann die Filterlage insbesondere eine Faserfilterlage, wie eine Faserfiltermatte, eine Wirrfasermatte, eine Papierfasermatte, eine Kunststoffvliesmatte oder eine Gelegefilterlage, wie beispielsweise eine Papiergelegematte umfassen.

Dabei kann gemäß einer vorteilhaften Ausgestaltung vorgesehen sein, dass die Filterlage auf nächstbenachbarten Segmentflachseiten eine strömungsmäßig alternierende Oberflächenausrichtung der Filterlage aufweist. Auf diese Weise ist eine symmetrische Durchströmung eines beispielsweise in Form eines U-Profils oder V-Profils angeordneten Paares von Segmenten günstig gegeben, wenn die nächstbenachbarten Segmentflachseiten parallel zueinander und parallel zur Strömungsrichtung des Rohgases ausgerichtet sind. So werden gleiche Filter- und Abscheiderandbedingungen für beide Schenkel eines U-Profils oder V-Profils zweier Segmente erreicht, was eine Homogenität der Filter- und/oder Abscheideparameter des Filterstrukturkörpers vorteilhaft gestalten lässt. Auch ist so eine günstige Homogenisierung des Gasstroms beim Durchströmen des Filterstrukturkörpers vorteilhaft erreichbar.

Gemäß einer vorteilhaften Ausgestaltung kann vorgesehen sein, dass die Filterlage zwischen Segmenten unterbrochen ist. Zweckmäßigerweise kann so die Oberflächenausrichtung der Filterlage zwischen den Segmenten dadurch geändert werden, dass die Filterlage unterbrochen ist. Eine segmentweise alternierende Oberflächenausrichtung der Filterlage kann dann dadurch erreicht werden, dass ein benachbartes Filterlagenstück mit entgegengesetzter Oberflächenausrichtung auf der Segmentflachseite angeordnet ist.

Gemäß einer vorteilhaften Ausgestaltung kann vorgesehen sein, dass die Filterlage aus wenigstens zwei Filterlagenschichten gebildet ist. Dadurch ergibt sich die Möglichkeit, abhängig von den abzuscheidenden Partikeln, den Filterstrukturkörper hinsichtlich der verwendeten Filterlage äußerst flexibel anpassen und auslegen zu können. Bei Bedarf können so mehrere verschiedenartige Filterlagen in Strömungsrichtung hintereinander angeordnet und gemeinsam auf der Stützstruktur fixiert sein. Aufgrund des begrenzten rohgasseitigen freien Strömungsquerschnitts ist die Gesamtdicke der mehreren Filterlagen entsprechend zu dimensionieren.

Gemäß einer vorteilhaften Ausgestaltung kann vorgesehen sein, dass der Verbindungsbereich quer zu einer Längserstreckung durch Stege getrennte Öffnungen aufweist, wobei vorzugsweise die Stege so platziert sind, dass diese mit den herausgeklappten Abstands- und/oder Versteifungselementen im Wesentlichen fluchten. Insbesondere befinden sich dabei die herausgeklappten Abstands- und/oder Versteifungselemente der Verbindungsbereiche im Filterstrukturkörper in Strömungsrichtung strömungsgünstig im Schatten der Stege, bevorzugt in einem Strömungsschatten der Stege.

Bei einem beispielhaften bestimmungsgemäßen Einbauzustand des Filterstrukturkörpers im Filtermodul und des Filtermoduls vor Ort, bei dem die Verbindungsbereiche mit den Stegen vertikal angeordnet sind, können die Stege in der Vertikalen eine größere Ausdehnung aufweisen als die herausgeklappten Abstands- und/oder Versteifungselemente. In diesem Fall befinden sich die Stege und die herausgeklappten Abstands- und/oder Versteifungselemente, abgesehen von einer etwaigen größeren Ausdehnung der Stege, auf einer Höhe in Bezug auf die Schwerkraft.

Bei einem beispielhaften bestimmungsgemäßen Einbauzustand des Filterstrukturkörpers im Filtermodul und des Filtermoduls vor Ort, bei dem die Verbindungsbereiche mit den Stegen horizontal angeordnet sind, können die Stege in der Horizontalen eine größere Ausdehnung aufweisen als die herausgeklappten Abstands- und/oder Versteifungselemente.

Abhängig von den zu filternden Partikeln und damit abhängig von der Art des zerstäubten Lacks bei Einsatz des Filterstrukturkörpers in einer Lackieranlage, der verwendeten Applikation sowie der vorherrschenden Luftkonditionen kann es durchaus sinnvoll sein, zur Erzielung eines geringeren Strömungswiderstandes Öffnungen im Verbindungsbereich der Stützstruktur vorzusehen. Diese Öffnungen sind durch Stege getrennt. Um den Strömungswiderstand weiter zu reduzieren sowie eine günstige Versteifung des Filterstrukturkörpers zu erreichen, ist es günstig, diese Stege auf der Höhe der herausgeklappten Abstands- und/oder Versteifungselementen anzuordnen. Hierfür ist gemäß dem vorgeschlagenen Aufbau des Filterstrukturkörpers lediglich die Ausstanzung der Stützstruktur entsprechend anzupassen.

Dabei kann gemäß einer vorteilhaften Ausgestaltung vorgesehen sein, dass die Öffnungen in einem einer Rohgasseite zugewandten Verbindungsbereich einen kleineren Querschnitt aufweisen als in einem einer Reingasseite zugewandten Verbindungsbereich. Dadurch wird eine möglichst günstige Durchströmung und Abscheiderate der Filterlage und somit auch eine hohe Effizienz des Filterstrukturkörpers auf Grund des durch eine solche Anordnung niedrigeren Strömungswiderstandes erreicht.

Gemäß einer vorteilhaften Ausgestaltung kann vorgesehen sein, dass die Stützstruktur aus Pappkarton gebildet ist. Pappkarton ist günstig zu bearbeiten, beispielsweise durch Stanzen, und weist ein niedriges Gewicht auf. Außerdem kann eine Filterlage darauf auf einfache Weise mittels Klammern, Nähen, Nieten, Kleben oder Ähnlichem fixiert werden, da das Material relativ weich ist. Außerdem ist Pappkarton recyclingfähig und kann weitgehend rückstandsfrei verbrannt werden.

Die in der Stützstruktur des Filterstrukturkörpers ausgebildeten Segmente sind insbesondere in den Verbindungsbereichen der Segmente durch Faltkanten getrennt, welche es ermöglichen die Segmente an den Faltkanten aufzustellen und in Form von U-Profilen oder V-Profilen anzuordnen. Die Faltkanten bei aufgestellten Segmenten sind dazu vorteilhaft schräg, insbesondere senkrecht zur Strömungsrichtung angeordnet.

Bei einer alternativen Ausgestaltung kann ein Filterstrukturkörper für ein Filtermodul zum Abscheiden von Verunreinigungen aus einem Verunreinigungen enthaltenden Rohgasstrom eine in eigensteife Segmente unterteilte eigensteife Filterstruktur umfassen, die wenigstens eine eigensteife Filterlage umfasst, wobei die Segmente zum Einbau in einen äußeren Rahmen mit der Filterlage in einer Stapelrichtung mit ihren Segmentflachseiten aufeinanderfolgend anordenbar sind.

Die Filterlage kann selbst die Filterstruktur bilden. Auf eine zusätzliche Stützstruktur kann gegebenenfalls verzichtet werden. Die Filterlage kann vorteilhaft Streckmetall und/oder Metallgewebe umfassen. Wenigstens zwei der Segmente können über einen Verbindungsbereich zusammenhängend ausgebildet sein, wobei in Stapelrichtung angeordnet wenigstens zwei der aufeinanderfolgenden Segmente mit ihren Segmentflachseiten Schenkel eines U-Profils oder V-Profils bilden können. Die Filterlage kann mit einer strömungsmäßig bevorzugten Oberflächenausrichtung ausgebildet sein.

Die Filterlage kann zwischen Segmenten unterbrochen sein. Die Filterlage kann aus wenigstens zwei Filterlagenschichten gebildet sein.

Gemäß einer vorteilhaften Ausgestaltung kann vorgesehen sein, dass zwei oder mehr Filterstrukturkörper in Strömungsrichtung quer, insbesondere senkrecht, zur Stapelrichtung in Serie angeordnet sind. Insbesondere, wenn die Partikelabscheidung hauptsächlich in der Tiefe der Filterlage (Tiefenfilter) anstatt an der Oberfläche stattfindet, ist die Aufnahmekapazität der Filterlage direkt von der Filterlagendicke abhängig. Um eine hohe Filterlagendicke und gleichzeitig einen ausreichend breiten rohgasseitigen Strömungsquerschnitt zu erreichen, kann deshalb ein zweiter Filterstrukturkörper des Filtermoduls unmittelbar an die Austrittsseite des ersten Filterstrukturkörpers anzuschließen.

Dabei kann gemäß einer vorteilhaften Ausgestaltung vorgesehen sein, dass die zwei oder mehr Filterstrukturkörper in Strömungsrichtung hintereinander spiegelsymmetrisch zu ihrer Kontaktfläche angeordnet sind. Um eine günstige Strömungsführung zu erreichen, ist es zweckmäßig, die Filterstrukturkörper in Strömungsrichtung hintereinander so anzuordnen, dass beispielsweise der Gasstrom durch die in Strömungsrichtung vordere Filterlage in ein U-Profil des Filterstrukturkörpers eintritt und das dahinterliegende U-Profil des in Strömungsrichtung folgenden Filterstrukturkörpers durch die Filterlage hindurch wieder verlässt. Dadurch kann vorteilhaft ein möglichst geringer Strömungswiderstand erreicht werden.

Gemäß einer vorteilhaften Ausgestaltung kann vorgesehen sein, dass der Verbindungsbereich quer zu einer Längserstreckung durch Stege getrennte Öffnungen aufweist und die Öffnungen in einem einer Rohgasseite zugewandten Verbindungsbereich einen kleineren Querschnitt aufweisen als in einem einer Reingasseite zugewandten Verbindungsbereich. Im Filterstrukturkörper kommt die Filterlage durch Faltung der Trägerstruktur in U-Profile und/oder V-Profile abwechselnd an Innenseiten und Außenseiten, bezogen auf die jeweiligen Profile, zum Liegen. An Biegungen, an denen die Filterlage an der Innenseite angeordnet ist, sind die Öffnungen zwischen den Stegen der jeweiligen Verbindungsbereiche vorteilhaft größer als an Biegungen, an denen die Filterlage an einer Außenseite angeordnet ist. Dadurch wird eine möglichst günstige Durchströmung und Abscheiderate der Filterlage und somit auch eine hohe Effizienz des Filtermoduls auf Grund des durch eine solche Anordnung niedrigeren Strömungswiderstandes erreicht.

Es kann auch vorteilhaft sein, eine Mehrzahl von Filtermodulen in Form einer Filtermodulwand anzuordnen, um größeren Filteranforderungen zu begegnen und vor allem, um bei großen Filteranordnungen mit einer dadurch gegebenen Modularität eine günstige Wartbarkeit der Filteranordnung zu gewährleisten.

Bei einer alternativen Ausgestaltung kann ein Filtermodul einen Filterstrukturkörper zum Abscheiden von Verunreinigungen aus einem Verunreinigungen enthaltenden Rohgasstrom eine in eigensteife Segmente unterteilte eigensteife Filterstruktur umfassen, die wenigstens eine eigensteife Filterlage umfasst, wobei die Segmente zum Einbau in einen äußeren Rahmen mit der Filterlage in einer Stapelrichtung mit ihren Segmentflachseiten aufeinanderfolgend anordenbar sind. Die Filterlage kann selbst die Filterstruktur bilden. Auf eine zusätzliche Stützstruktur kann gegebenenfalls verzichtet werden. Die Filterlage kann Streckmetall und/oder Metallgewebe umfassen.

Gemäß einer vorteilhaften Ausgestaltung des Filtermoduls kann an dessen Unterseite eine Auffangeinrichtung vorgesehen sein. Die Auffangeinrichtung kann insbesondere aus reißfestem, flüssigkeitsbeständigem Material gebildet sein, etwa in Form einer formstabilen Wanne, in Form von geeignet geformten und angebrachten Tüten, Säcken, Folienzuschnitten oder dergleichen.

Abhängig von den Lackeigenschaften und den Prozessbedingungen kann die Konsistenz des im Filtermodul abgeschiedenen Lacks noch fließfähig sein, was zu einem Austritt von abgeschiedenem Lack aus dem Filter führen kann. Durch die flüssigkeitsdichte, durchweichsichere Auffangeinrichtung, beispielsweise eine Wanne, die im Anwendungsfall den Bodenbereich des Filtermoduls umschließt, kann ein vergrößertes, auslaufsicheres Reservoir gebildet werden, das die Lackspeicherfähigkeit des Filtermoduls erhöht und zugleich Verschmutzungen der Filterumgebung vorbeugt. Die Standzeit des Filtermoduls wird durch die Auffangeinrichtung gegenüber dem begrenzten intrinsischen Speichervolumen des Filtermoduls für noch fließfähigen abgeschiedenen Lack erhöht.

**In** einer günstigen Ausführungsform kann eine einteilige Wanne zum Einsatz kommen, die insbesondere durch Faltung in eine vorgesehene Geometrie gebracht werden kann. Die Wanne kann durch Faltung aus einem rechteckigen oder quadratischen Zuschnitt des Wannenmaterials in an sich bekannter Weise so geformt werden, dass sie eine lückenlos geschlossene, den äußeren Rahmen des Filtermoduls eng umschließende Form aufweist.

Die Auffangeinrichtung kann vorteilhaft aus einem ausreichend reißfesten, flüssigkeitsbeständigen Material bestehen, das vorzugsweise so dünn ist, dass die Außenabmessungen des Filterstrukturkörpers oder des Filtermoduls nicht wesentlich verändert werden. Vorzugsweise besteht die Auffangeinrichtung aus wasserfest beschichtetem Papiermaterial oder Kartonmaterial oder aus dünnem Kunststoff. Günstigerweise kann als Material für die Auffangeinrichtung ein einseitig oder beidseitig mit Polyethylen beschichtetes Kartonmaterial zum Einsatz kommen, das häufig auch als Milchtütenpapier oder Milchtütenkarton bezeichnet wird.

Zweckmäßigerweise kann die Auffangeinrichtung nach der Montage des Filterstrukturkörpers in den äußeren Rahmen über den äußeren Rahmen des Filtermoduls gestülpt werden. Optional können mehrere Filtermodule in eine gemeinsame Auffangeinrichtung eingesetzt werden. Optional kann ein Filtermodul als Hauptfilterstufe mit etwaigen zugehörigen Nachfilterstufen gemeinsam in eine Auffangeinrichtung eingesetzt sein. Alternativ kann die Auffangeinrichtung auch in das Filtermodul integriert sein, etwa im äußeren Rahmen angeordnet sein.

**In** einer weiteren Ausführungsform kann die Auffangeinrichtung auch auf der Anströmseite des Filtermoduls über den äußeren Rahmen hinaus überstehend ausgeführt sein, so dass an der Anströmseite herablaufender Lack sowie von oberhalb des Filtermoduls herabtropfender oder herablaufender Lack aufgefangen und das Speichervolumen nochmals vergrößert wird.

**In** einer weiteren Ausführungsform kann die Auffangeinrichtung mit einem Überlauf oder Ablauf ausgeführt sein, durch den noch gut fließfähiger abgeschiedener Lack an definierter Stelle aus dem Filtermodul abgeleitet werden kann.

Der Ablauf kann dabei in ein unterhalb angeordnetes Filtermodul oder einen unterhalb angeordneten Sammelbehälter erfolgen. Auch eine direkte Ausschleusung des abfließenden Lacks aus der Lackierkabine durch eine Fördereinrichtung, beispielsweise einen Siphon, eine Pumpe, eine Schnecke oder dergleichen ist möglich. Bevorzugt kommt bei dieser Ausführungsform eine auf der Anströmseite über den äußeren Rahmen des Filtermoduls hinaus überstehende Auffangeinrichtung, beispielsweise eine Wanne, zum Einsatz, wobei der Ablauf durch ein Loch im Boden des überstehenden Auffangeinrichtungsteils realisiert werden kann.

In einer günstigen Ausgestaltung kann nachgeschaltet zu dem Filtermodul wenigstens eine weitere Filterstufe als Nachfilterstufe vorgesehen sein. Bevorzugt wird das Filtermedium der Nachfilterstufe in einen separaten äußere Rahmen eingesetzt. Verwendet werden können beispielsweise filternde Abscheider, insbesondere Faserfilter wie Wirrfasermatten oder Kunstvliese. Diese können analog zum Aufbau des Filtermoduls auf einer Stützstruktur fixiert und in den zugehörigen äußeren Rahmen eingesetzt werden. Idealerweise ist in diesem Fall der äußere Rahmen der Nachfilterstufe im Vergleich zu den Segmenten des Filterstrukturkörpers tiefer, vorzugsweise einige Zentimeter, beispielsweise 5 cm bis 15 cm. Die Stützstruktur der Nachfilterstufe kann dann im äußeren Rahmen in Richtung der Ausströmseite der Nachfilterstufe auf der Reingasseite verschoben werden. Dadurch ergibt sich der Vorteil, dass zwischen dem Ausströmpunkt aus dem Filtermedium des Filtermoduls als Hauptfilterstufe und dem Einströmpunkt in das Filtermedium der Nachfilterstufe ein Freiraum ausgebildet ist, in welchem sich die Luftströmung vergleichmäßigen kann. Dadurch wird die Filterfläche der Nachfilterstufe entsprechend gleichmäßig belastet.

Alternativ kann das Filtermaterial der Nachfilterstufe lediglich flächig und quer zur Anströmrichtung in einen äußeren Rahmen eingebaut bzw. eingelegt werden. Abhängig von der Beschaffenheit des Filtermaterials kann es zu dessen Halterung ausreichend sein, wenn der äußere Rahmen an der Ausströmseite/Reingasseite in Gitterform ausgebildet sein kann. Auf den Einsatz einer Stützstruktur kann in diesem Fall verzichtet werden.

Sofern eine Halterung des flächig eingebauten Filtermaterials erforderlich ist, kann beispielsweise ein rohgasseitiger Rahmen oder aber Haltestifte oder Halteklammern, welche am reingasseitigen Gitter befestigt werden, zur Befestigung des Filtermediums eingesetzt werden. Auch beim flachen Einbau der Filtermatte in die Nachfilterstufe wird vorzugsweise ein gewisser Abstand zwischen der Ausströmseite des Filtermoduls und der Einströmseite der Nachfilterstufe vorgesehen. Dieser Abstand kann günstigerweise durch einen, im Vergleich zum Filtermedium, tieferen äußeren Rahmen der Nachfilterstufe realisiert sein.

Die Höhe wie auch die Breite der äußeren Rahmen der Nachfilterstufen können dagegen vorzugsweise identisch zu denen der Hauptfilterstufe mit einem oder mehreren Filtermodulen sein. Dadurch können die Nachfilterstufen zusammen mit der Hauptfilterstufe in eine Filtermodulaufnahme, d.h. einen Filterrahmen eingebaut werden. Dabei können die Filterstufen einzeln, d.h. nacheinander, oder aber gemeinsam als ein Bauteil in die Filtermodulaufnahme installiert werden. Bevorzugt werden die Filterstufen als ein Bauteil in die Filtermodulaufnahme eingesetzt und vor dem Einbau miteinander, beispielsweise mit Klebeband, idealerweise luftdicht verbunden.

Optional kann zur einfachen Demontage aus einer Filtermodulaufnahme und/oder zum Schutz der Filtermodulaufnahme vor Verschmutzung vorgesehen sein, ein oder mehrere Filtermodule in eine Schutzhülle, beispielsweise einen Sack, Beutel oder dergleichen, einzusetzen.

Die nach der Montage des Filtermoduls oder der Filtermodule in der Filtermodulaufnahme beidseitig, reingasseitig und rohgasseitig, offene Schutzhülle kann vorzugsweise vor der Demontage des gesättigten Filtermoduls anströmseitig, d.h. rohgasseitig, verschlossen werden. Durch Ziehen beispielsweise am Verschluss kann die Schutzhülle mitsamt Filtermodul oder Filtermodulen aus der Filtermodulaufnahme entfernt werden. Dazu kann zweckmäßigerweise reingasseitig an der Schutzhülle ein Steg zur Kraftübertragung auf das Filtermodul oder die Filtermodul/e vorgesehen sein. Um die Stabilität der Schutzhülle zu erhöhen, kann diese aus einem Gewebematerial, z.B. aus Kunststoffgewebe, gebildet sein. Alternativ können mehrere Filtermodule oder Filterstufen beim Einbau in die Filtermodulaufnahme beispielweise mit Palettenbändern gebündelt sein und nach deren Sättigung an diesen, gemeinsam mit der Schutzhülle, aus der Filtermodulaufnahme gezogen werden.

Optional kann die Schutzhülle wiederverwendbar sein. Alternativ können auch Einweg-Schutzhüllen eingesetzt werden. In diesem Fall kann das Filtermodul bzw. die Filtermodule bereits in der Schutzhülle an die Filtermodulaufnahme angeliefert werden.

Bevorzugt werden mehrere Filtermodule gemeinsam in eine Schutzhülle eingesetzt. Zur gleichmäßigen Verteilung des Gewichts werden bei vertikal übereinander angeordneten Filtermodulen horizontale Trennelemente beispielsweise aus Metall, Holz oder Karton eingesetzt. Sofern mehrere vertikale Reihen von Filtermodulen in eine Schutzhülle integriert sind, können zusätzlich auch vertikale Trennelemente eingebaut werden. Gemeinsam mit den horizontalen Trennelementen bilden diese dann vorzugsweise ein Versteifungskreuz aus, so dass die übereinander gestapelten Filtermodule auch bei zunehmender Sättigung eine stabile Einheit bleiben.

Zur formschlüssigen Aufnahme des Filtermoduls in der Filtermodulaufnahme bzw. dem Filtermodulrahmen kann es vorteilhaft sein, wenn der Querschnitt des äußeren Rahmens in Durchströmungsrichtung eine verjüngende Form aufweist. Damit wird das Filtermodul auch bei Anliegen eines hohen Unterdrucks wirksam fixiert. Alternativ kann das Filtermodul auch eine erweiternde Form aufweisen.

Eine Filtermodulaufnahme kann stationär oder beweglich angeordnet sein. Insbesondere eine beweglich angeordnete Filtermodulaufnahme kann beispielsweise als ein Wagen und/oder Trolley mit Rädern ausgebildet sein. Der Wagen und/oder Trolley kann dann mit einem oder mehreren darin angeordneten Filtermodulen manuell oder automatisiert zwischen verschiedenen Positionen bewegt werden.

Ein günstiges Verfahren zum Herstellen eines Filterstrukturkörpers zum Abscheiden von Verunreinigungen aus einem Verunreinigungen enthaltenden Rohgasstrom umfasst dabei ein Aufbringen und Fixieren einer Filterlage zumindest auf Segmentflachseiten von Segmenten einer bahnförmigen Stützstruktur, wobei wenigstens zwei Segmente mittels Verbindungsbereichen verbunden sind.

Eine in Abhängigkeit von den Eigenschaften der abzuscheidenden Partikel gewählte Filterlage wird in einem ersten Schritt auf einer Stützstruktur, vorzugsweise aus Karton, beispielsweise durch Klammern, Nähen, Nieten, Kleben oder Ähnlichem, außerhalb des äußeren Rahmens des Filtermoduls, fixiert. Die Stützstruktur kann von einer Rolle abgewickelt und nach der Belegung mit der Filterlage gleich wieder aufgewickelt werden. So könnte die Stützstruktur als eine Art Halbzeug von einem Zulieferer einer Endmontage des Filtermoduls zugeliefert werden.

Insbesondere können eigensteife Segmente verwendet werden.

Dabei kann gemäß einer vorteilhaften Ausgestaltung vorgesehen sein, dass die Filterlage auf die Stützstruktur fortlaufend bandförmig und/oder stückweise auf jedes Segment, insbesondere bei stückweiser Aufbringung mit einer segmentweise alternierenden Oberflächenausrichtung der Filterlage, aufgebracht wird.

Gemäß einer vorteilhaften Ausgestaltung kann ferner vorgesehen sein, dass nach dem Fixieren der Filterlage auf der Stützstruktur ein Aufstellen von an und/oder in Segmentflachseiten der Segmente der Stützstruktur angeordneten vorgeprägten und/oder wenigstens bereichsweise vorgestanzten Abstands- und/oder Versteifungselementen durchgeführt wird, gefolgt von einem Falten der Stützstruktur zu einem dreidimensionalen Filterstrukturkörper so, dass die Segmentflachseiten aufeinanderfolgend quer zu einer Stapelrichtung liegen.

Der Filterstrukturkörper, auch Innenaufbau genannt, wird vorzugsweise durch einfaches Falten in eine derartige Geometrie gebracht, dass die wirksame Filterfläche im Vergleich zu einer senkrechten Anströmung des Filtermoduls deutlich vergrößert wird. Eine gegenseitige Beabstandung der einzelnen aufgestellten Segmente sowie eine Versteifung des Filterstrukturkörpers wird durch das Aufstellen von an und/oder in Segmentflachseiten der Segmente der Stützstruktur angeordneten vorgeprägten und/oder wenigstens bereichsweise vorgestanzten Abstands- und/oder Versteifungselementen erreicht. Diese Abstands- und/oder Versteifungselemente können darüber hinaus mittels geeigneter Rastelemente eine Verrastung oder Verklemmung der einzelnen Segmente bewirken.

Dazu sind diese Rastelemente sowie Rastgegenelemente in den Abstands- und/oder Versteifungselementen aus den Segmentflachseiten wegklappbar und/oder herausklappbar vorgesehen. Der fertig montierte Filterstrukturkörper wird dann in dem äußeren Rahmen eines Filtermoduls gasdicht montiert.

Dabei kann vorteilhaft vorgesehen sein, dass die Stützstruktur zum Anbringen der Filterlage abgewickelt ausgebreitet wird. Auf diese Weise lässt sich die Filterlage einfach und zweckmäßig auf die Stützstruktur flächig ausbreiten und fixieren. Auch lassen sich so einzelne Filterlagenstücke leichter aufbringen und fixieren. So wird ein besonders effektiver Fertigungsprozess für die Herstellung des Filterstrukturkörpers gewährleistet, da anschließend die Stützstruktur nur noch in der entsprechenden Weise zu einer dreidimensionalen Geometrie aus aufgestellten Segmenten gefaltet werden muss.

Vorteilhaft könnte dabei der Filterstrukturkörper als flache oder bandförmig als eine Rolle aufgewickelte Stützstruktur an den Bestimmungsort zur Endmontage des Filtermoduls gesendet werden und erst bei der Endmontage von der Rolle abgewickelt und mit Aufstellen der Segmente in U-Profil-Form oder V-Profil-Form als Filterstrukturkörper fertiggestellt werden.

Günstigerweise können beim Falten der Stützstruktur zu einem dreidimensionalen Filterstrukturkörper auch U-förmige oder V-förmige Profile gebildet werden, welche ein besonders effektives Filtern von Rohgas und Abscheiden von Verunreinigungen ermöglichen.

### Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: eine abgewickelte Stützstruktur eines Filtermoduls nach einem Ausführungsbeispiel der Erfindung in Draufsicht;
- Fig. 2: eine Stützstruktur mit darauf fixierter Filterlage nach einem Ausführungsbeispiel der Erfindung in isometrischer Ansicht;
- Fig. 3: einen Filterstrukturkörper nach einem Ausführungsbeispiel der Erfindung mit zwei zu einem U-Profil aufgestellten Segmenten in isometrischer Ansicht;
- Fig. 4: einen Filterstrukturkörper nach einem Ausführungsbeispiel der Erfindung mit drei U-Profilen in Draufsicht;
- Fig. 5: die Montage eines Filterstrukturkörpers nach einem Ausführungsbeispiel der Erfindung mit drei U-Profilen in einen äußeren Rahmen;
- Fig. 6: einen äußeren Rahmen eines Filtermoduls nach einem Ausführungsbeispiel der Erfindung mit montiertem Filterstrukturkörper ohne Filterlage in isometrischer Ansicht;
- Fig. 7: einen Querschnitt durch den äußeren Rahmen von Fig. 6 mit einer Sicht in Strömungsrichtung;
- Fig. 8: einen Filterstrukturkörper nach einem Ausführungsbeispiel der Erfindung mit einer Filterlage aus zwei Filterlagenschichten in Draufsicht;
- Fig. 9: ein Filtermodul nach einem Ausführungsbeispiel der Erfindung mit einem Filterstrukturkörper aus drei U-Profilen in isometrischer Ansicht;
- Fig. 10: ein Filtermodul nach einem Ausführungsbeispiel der Erfindung mit einem Filterstrukturkörper aus zwei U-Profilen in isometrischer Ansicht;
- Fig. 11: einen Teil eines U-Profils eines Filterstrukturkörpers nach einem Ausführungsbeispiel der Erfindung mit einer durchgehenden Filterlage in Draufsicht;
- Fig. 12: einen Teil eines U-Profils eines Filterstrukturkörper nach einem Ausführungsbeispiel der Erfindung mit einer im Verbindungsbereich unterbrochenen Filterlage in Draufsicht;
- Fig. 13: einen Filterstrukturkörper nach einem Ausführungsbeispiel der Erfindung mit einer Filterlage aus zwei Filterlagenschichten mit großer Dicke in Draufsicht;
- Fig. 14: zwei hintereinander angeordnete Filterstrukturkörper nach einem Ausführungsbeispiel der Erfindung mit entgegengesetzter Ausrichtung in Draufsicht;
- Figur 15: eine Nachfilterstufe für ein Filtermodul;
- Figur 16: eine Anordnung mit Filtermodul und Nachfilterstufe;
- Figur 17: eine Anordnung mit Filtermodul und Auffangeinrichtung für fließfähigen Lack; und
- Figur 18: eine Anordnung mit Filtermodul und Schutzhülle.

### Ausführungsformen der Erfindung

In den Figuren sind gleichartige oder gleichwirkende Komponenten mit gleichen Bezugszeichen beziffert. Die Figuren zeigen lediglich Beispiele und sind nicht beschränkend zu verstehen.

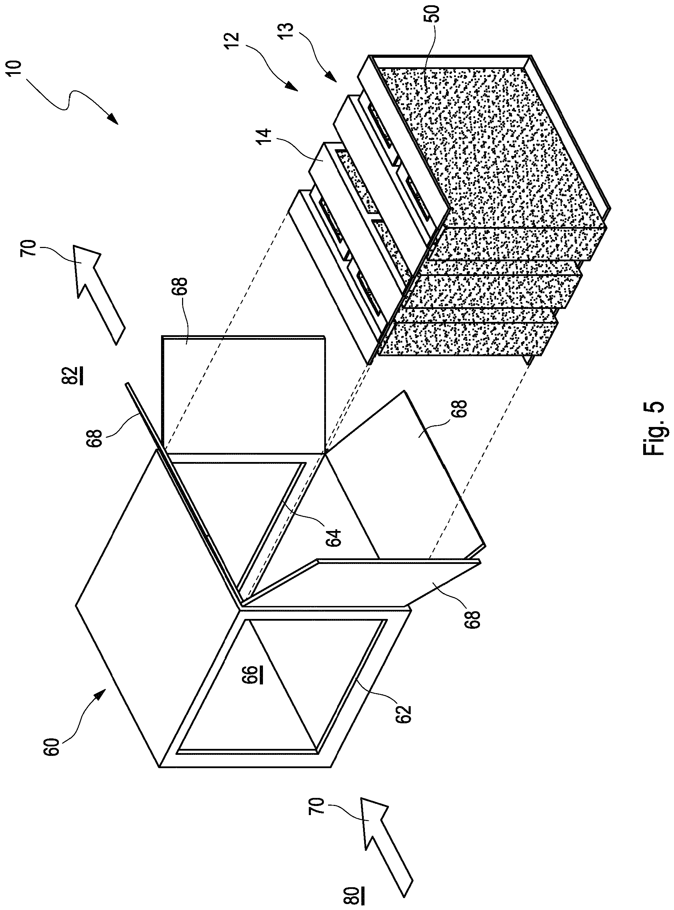

Ein erfindungsgemäßes Filtermodul 10 zum Abscheiden von Verunreinigungen aus einem Verunreinigungen enthaltenden Rohgasstrom, wie es beispielsweise in Figur 5 während der Montage dargestellt ist, umfasst einen dreidimensionalen Filterstrukturkörper 12, durch welchen der Rohgasstrom leitbar ist, welcher eine in Segmente 18 unterteilte Stützstruktur 14 und eine darauf angeordnete, insbesondere fixierte, Filterlage 50 aufweist, wobei wenigstens zwei der Segmente 18 über einen Verbindungsbereich 34, 35 zusammenhängend ausgebildet sind. Die Stützstruktur 14 und die darauf angeordnete Filterlage 50 bilden eine Filterstruktur 13. Weiter umfasst das Filtermodul 10 einen äußeren Rahmen 60 zur Aufnahme des Filterstrukturkörpers 12. Die Segmente 18 sind mit der darauf angeordneten Filterlage 50 in einer Stapelrichtung 44 mit ihren Segmentflachseiten 20, 22 aufeinanderfolgend angeordnet.

In einer alternativen Ausgestaltung kann die Filterstruktur 13, die zum Filterstrukturkörper 12 geformt wird, auch ein eigensteifes Filtermedium umfassen, beispielsweise Streckmetall und/oder Metallgewebe.

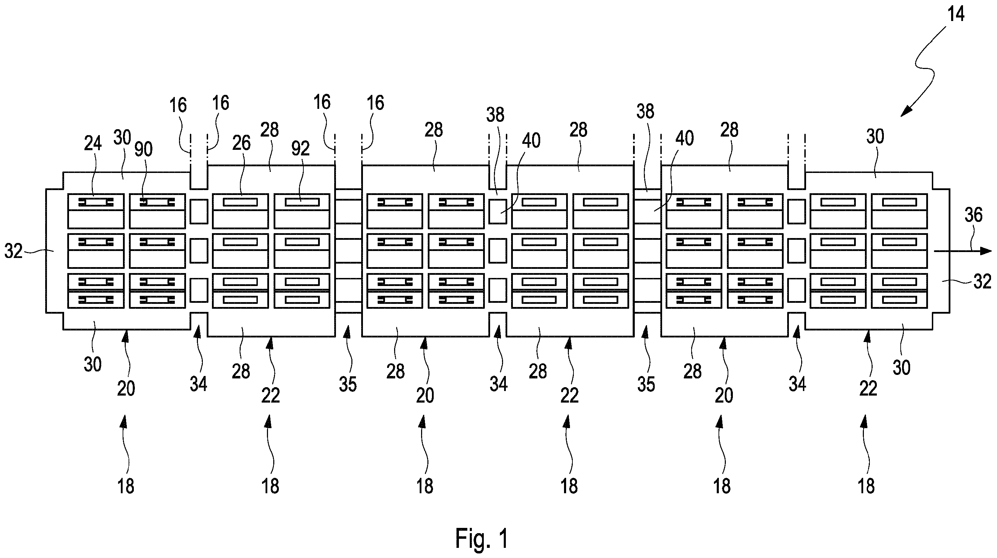

Figur 1 zeigt eine abgewickelte Stützstruktur 14 eines Filtermoduls 10 nach einem Ausführungsbeispiel der Erfindung in Draufsicht. In einer Längserstreckung 36 der Stützstruktur 14 aufeinanderfolgende Segmente 18 sind jeweils über einen Verbindungsbereich 34, 35 zusammenhängend ausgebildet, damit jeweils zwei zusammenhängende Segmente 18 in Form eines U-Profils oder V-Profils an den Verbindungsbereichen 34, 35 umgeklappt werden können. Die Segmente 18 weisen Segmentflachseiten 20, 22 auf. Zwischen den Verbindungsbereichen 34, 35 und den Segmentflachseiten 20, 22 sind zum Falten der Stützstruktur 14 und Aufstellen der Segmente 18 Faltkanten 16 angeordnet. Quer zu den Segmentflachseiten 20, 22 sind wegklappbare Abstands- und/oder Versteifungselemente 28, 30, 32 sowie aus den Segmentflachseiten 20, 22 herausklappbare Abstands- und/oder Versteifungselemente 24, 26 ausgebildet. Zueinander weisende Abstands- und/oder Versteifungselemente 24, 26, 28, 30, 32 jeweils benachbarter Segmente 18 sind beim Aufklappen der Segmente zu U-Profilen oder V-Profilen wenigstens teilweise miteinander verbindbar, insbesondere verrastbar oder verklemmbar. Die Abstands- und/oder Versteifungselemente 30, 32 eines Randsegments der Stützstruktur 14 sind jeweils verschieden zu den übrigen Abstands- und/oder Versteifungselementen 28 ausgebildet, da sie zur Fixierung und Versteifung des Filterstrukturkörpers 12 in dem äußeren Rahmen 60 dienen.

Die Stützstruktur 14 kann beispielsweise vorteilhaft aus Pappkarton gebildet sein. Dabei kann zum platzsparenden Transport die Stützstruktur 14 etwa an den markierten Faltkanten 16 gefaltet werden, so dass ein kompaktes und weniger sperriges Element entsteht. Alternativ kann die Stützstruktur 14 zum Transport auch auf einer Rolle aufgewickelt sein, insbesondere auch mit bereits fixierter Filterlage 50 und würde dann erst zur Fertigstellung des Filterstrukturkörpers 12 mit Aufstellen der Segmente 18 zu U-Profilen oder V-Profilen von der Rolle abgewickelt werden.

Die Verbindungsbereiche 34, 35 weisen quer zu einer Längserstreckung 36 durch Stege 38 getrennte Öffnungen 40 auf, wobei vorzugsweise die Stege 38 so platziert sind, dass diese mit den herausgeklappten Abstands- und/oder Versteifungselementen 24, 26 im Wesentlichen fluchtend angeordnet sind. Die Öffnungen 40 in einem in bestimmungsgemäßem Montagezustand einer Rohgasseite 80 zugewandten Verbindungsbereich 34 weisen einen kleineren Querschnitt auf als in einem einer Reingasseite 82 zugewandten Verbindungsbereich 35, um die aus den Segmenten 18 gebildeten U-Profile strömungstechnisch günstiger gestalten zu können.

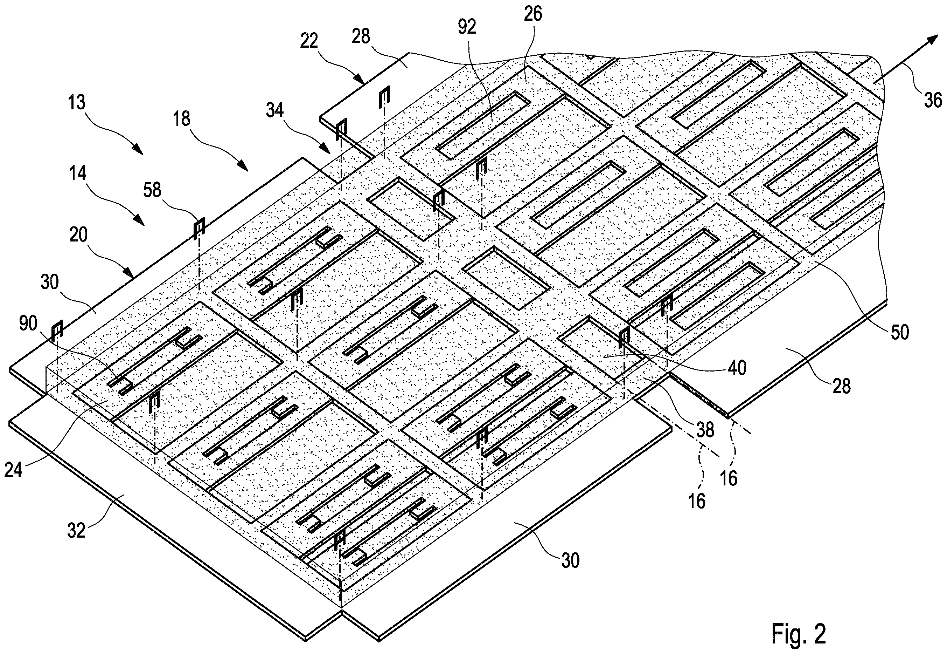

In Figur 2 ist ein Detail der Filterstruktur 13, umfassend Stützstruktur 14 mit darauf fixierter Filterlage 50 (transparent dargestellt) nach einem Ausführungsbeispiel der Erfindung in isometrischer Ansicht dargestellt. Die Stützstruktur 14 wird zum Anbringen der Filterlage 50 zweckmäßigerweise abgewickelt ausgebreitet. Die Filterlage 50, beispielsweise eine Faserfiltermatte, ist, wie in Figur 2 dargestellt, entlang der Längserstreckung 36 der bahnförmigen Stützstruktur 14 flächig auf den Segmentflachseiten 20, 22 der mit Verbindungsbereichen 34, 35 verbundenen Segmenten 18 ausgebreitet und beispielsweise mit Hilfe von Klammern als Fixierelement 58 auf dieser fixiert. Die Art der Fixierung kann unter anderem abhängig von der Art der verwendeten Filterlage 50 (Faserfilter, Papiergelegefilter, usw.) variieren.

Anschließend wird die Filterstruktur 13 durch Abwicklung der Stützstruktur 14 inklusive der Filterlage 50 sukzessive durch Falten in die vorgesehene Geometrie des Filterstrukturkörpers 12 gebracht. Durch den Zusammenbau ergibt sich eine dreidimensionale Struktur des Filterstrukturkörpers 12, vorzugsweise in Form von U-Profilen oder aber V-Profilen, wodurch im Vergleich zur Verwendung einer senkrecht angeströmten Filterlage 50 die wirksame Filteroberfläche deutlich vergrößert werden kann. Dazu werden zunächst an und/oder in Segmentflachseiten 20, 22 der Segmente 18 der Stützstruktur 14 angeordnete vorgeprägte und/oder wenigstens bereichsweise vorgestanzte Abstands- und/oder Versteifungselemente 24, 26, 28, 30, 32 aufgestellt. Zueinander weisende Abstands- und/oder Versteifungselemente 24 benachbarter Segmente 18 weisen dazu zweckmäßigerweise wenigstens ein Rastelement 90 auf, welches in einem bestimmungsgemäß herausgeklappten Zustand mit einem Rastgegenelement 92 eines gegenüber liegenden Abstands- und/oder Versteifungselementes 26 eines benachbarten Segments 18 verrastbar ist.

Nach dem Aufstellen der Abstands- und/oder Versteifungselemente 24, 26, 28, 30, 32 wird die Stützstruktur 14 zu einem dreidimensionalen Filterstrukturkörper 12 so gefaltet, dass die Segmente 18 quer zu der Stapelrichtung 44 liegen.

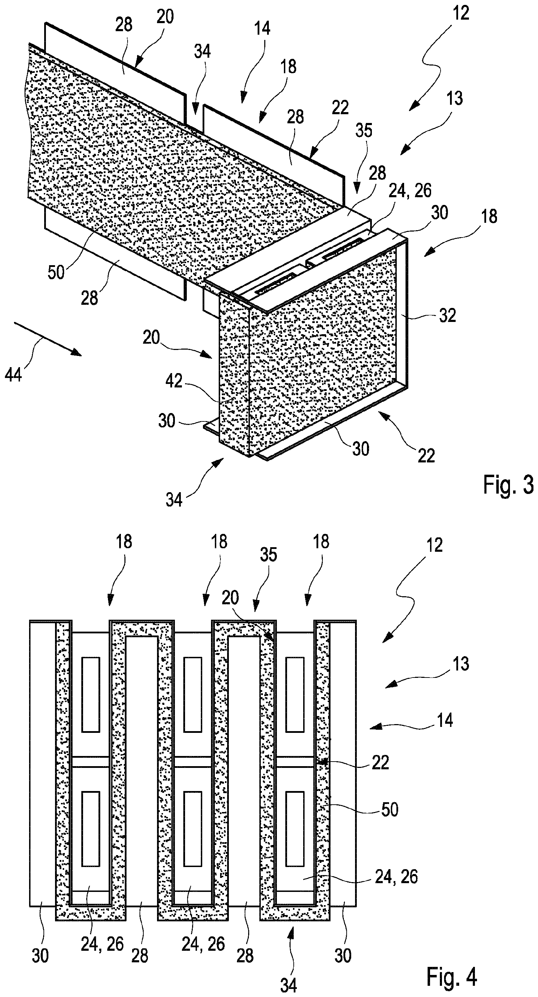

Figur 3 zeigt dazu einen Filterstrukturkörper 12 nach einem Ausführungsbeispiel der Erfindung mit zwei zu einem U-Profil aufgestellten Segmenten 18 in isometrischer Ansicht. Deutlich sind die herausgeklappten Abstands- und/oder Versteifungselemente 28, 30, 32 der Segmente 18 in ihrem bestimmungsgemäßen Zustand zur Beabstandung und/oder Versteifung der einzelnen Segmente 18 zu erkennen. Die Segmente 18 bilden mit ihren Segmentflachseiten 20, 22 Schenkel des U-Profils.

In Figur 4 ist ein Filterstrukturkörper 12 nach einem Ausführungsbeispiel der Erfindung mit drei U-Profilen in Draufsicht gezeigt. In der Draufsicht sind zwischen den Segmenten 18 die herausgeklappten Abstands- und/oder Versteifungselemente 24, 26 zu erkennen, welche die Segmente 18 auf Abstand halten und zur Versteifung der U-Profile beitragen.

Nachdem der Filterstrukturkörper 12 vollständig gefaltet und zusammengebaut ist, kann der Filterstrukturkörper 12 in den äußeren Rahmen 60 eingebaut werden. Bevorzugt wird der Filterstrukturkörper 12 derart in den äußeren Rahmen 60 eingebracht, dass dieser den Filterstrukturkörper 12 kraftschlüssig in Form eines Presssitzes aufnimmt. Aufgrund des umlaufenden Presssitzes zwischen äußerem Rahmen 60 und Filterstrukturkörper 12 kann beispielsweise auf eine zusätzliche formschlüssige Verbindung zwischen beiden Komponenten zur Fixierung verzichtet werden. Optional kann bereits das Verschließen des äußeren Rahmens beispielsweise durch Verschlussteile 68, wie in Figur 5 dargestellt, für eine ausreichende Halterung bzw. Fixierung des Filterstrukturkörpers 12 sorgen.

In einer alternativen Ausgestaltung kann die Filterstruktur 13, die zum Filterstrukturkörper 12 gefaltet ist, auch eine eigensteife Filterlage ohne Stützkörper umfassen, beispielsweise Streckmetall und/oder Metallgewebe.

Figur 5 zeigt die Montage eines Filterstrukturkörpers 12 nach einem Ausführungsbeispiel der Erfindung mit drei U-Profilen in einen äußeren Rahmen 60. Der Filterstrukturkörper 12 wird durch die geöffneten Verschlussteile 68 des äußeren Rahmens 60 ins Innere 66 des Rahmens 60 eingebracht. Danach werden die Verschlussteile 68 geschlossen. Auf diese Weise ist der Filterstrukturkörper 12 auch im Wartungsfall bei Bedarf auszutauschen, so dass nicht das Filtermodul 10 zwangsläufig als Ganzes getauscht werden muss. Durch den eingesetzten Filterstrukturkörper 12 ist die rohgasseitige Öffnung 62 des äußeren Rahmens 60 von der reingasseitigen Öffnung 64 des Rahmens 60 weitgehend gasdicht getrennt. Etwaige unerwünschte Undichtigkeiten können sich im Betrieb mit Ablagerungen aus dem Rohgasstrom zusetzen und teilweise oder ganz beseitigt werden. Die Filterlage 50 ist von dem Rohgas quer anströmbar.

Das Filtermodul 10 kann dann in eine nicht dargestellte stationär oder beweglich angeordnete Filtermodulaufnahme eingesetzt werden.

Zur formschlüssigen Aufnahme des Filtermoduls 10 in der Filtermodulaufnahme kann es vorteilhaft sein, wenn der Querschnitt des äußeren Rahmens 60 in Durchströmungsrichtung 70 eine verjüngende Form aufweist. Damit wird das Filtermodul 10 auch bei Anliegen eines hohen Unterdrucks wirksam fixiert. Alternativ kann das Filtermodul 10 auch eine in Strömungsrichtung 70 erweiternde Form aufweisen.

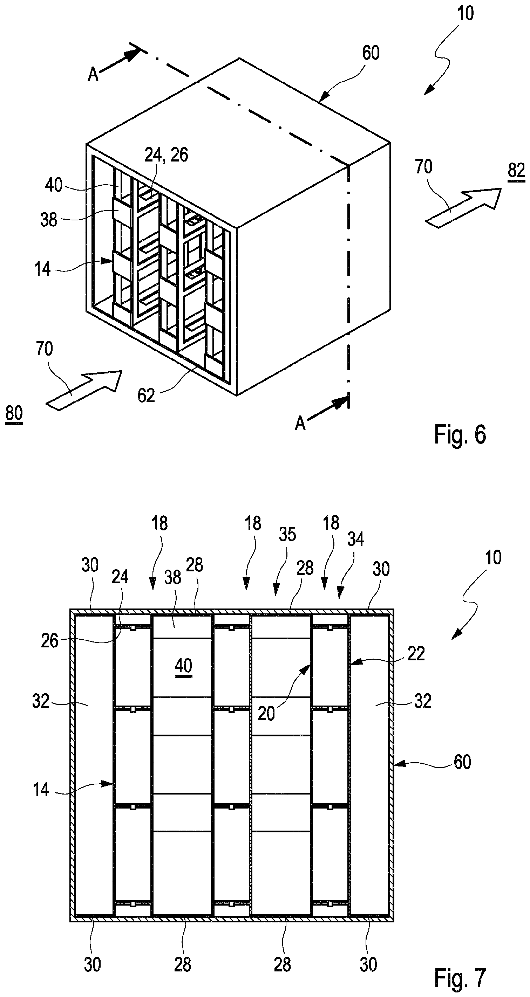

Figur 6 zeigt einen äußeren Rahmen 60 eines Filtermoduls 10 nach einem Ausführungsbeispiel der Erfindung mit montiertem Filterstrukturkörper 12 ohne Filterlage 50 in isometrischer Ansicht. **In** Figur 7 ist ein Querschnitt durch den äußeren Rahmen 60 von Figur 6 mit einer Sicht in Strömungsrichtung 70 dargestellt.

**In** den Figuren 6 und 7 ist beispielhaft dargestellt wie der beschriebene Presssitz zwischen äußerem Rahmen 60 und Filterstrukturkörper 12 realisiert werden kann. Hierzu werden sowohl roh- als auch reingasseitige Abstands- und/oder Versteifungselemente 24, 26, 28, 30, 32 als Querversteifungen zwischen den Segmenten 18 eingesetzt, welche einerseits der ganzheitlichen Versteifung beider Komponenten in Querrichtung, anderseits aber auch zur Stabilisierung der ausgebildeten Geometrie, beispielsweise der U-Profile, bei zunehmender Filterbelastung durch eine erhöhte Druckdifferenz und Aufnahme von Partikeln dienen. In Längsrichtung des Filtermoduls 10, der Strömungsrichtung 70, wird die Fixierung des Filterstrukturkörpers 12 ebenfalls durch einen Presssitz zwischen äußerem Rahmen 60 und Filterstrukturkörper 12 realisiert.

Durch den vorgeschlagenen Aufbau des Filtermoduls 10 wird neben der Vergrößerung der wirksamen Filterfläche durch die dreidimensionale Struktur auch der rohgasseitige Strömungsquerschnitt 72 und damit das Aufnahmevolumen wesentlich vergrößert.

Ferner ist es möglich, mehrere Filterlagenschichten verschiedener Faserfilter und/oder Papiergelegefilter übereinander anzuordnen und anschließend gemeinsam auf der Stützstruktur 14 zu fixieren. Dadurch ergibt sich die Möglichkeit, abhängig von den abzuscheidenden Partikeln das Filtermodul 10 hinsichtlich der verwendeten Filterlage 50 äußerst flexibel anpassen und auslegen zu können.

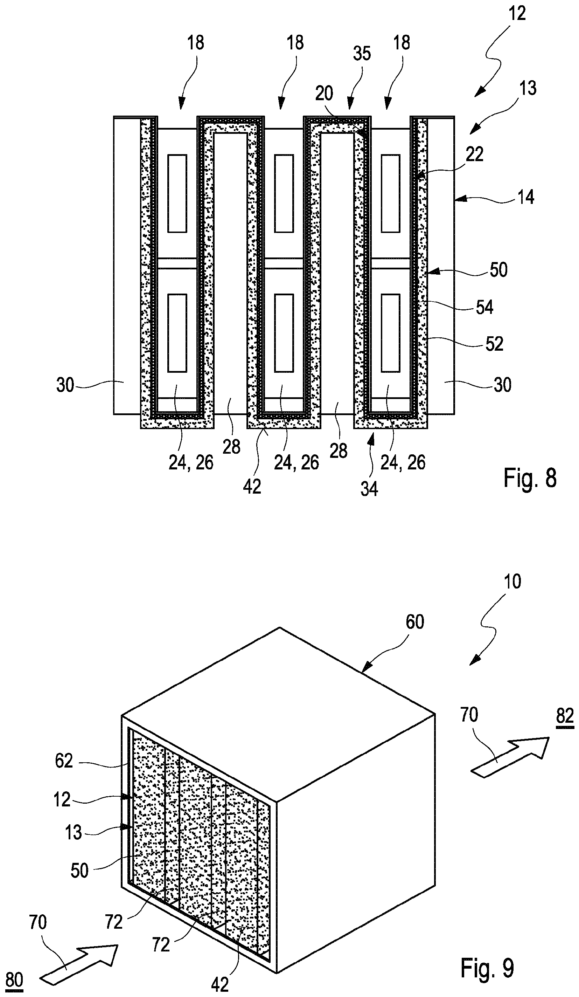

Figur 8 zeigt dazu einen Filterstrukturkörper 12 nach einem Ausführungsbeispiel der Erfindung mit einer Filterlage 50 aus zwei übereinander gelegten Filterlagenschichten 52, 54 in Draufsicht.

Abhängig von den zu filternden Partikeln und damit beispielsweise abhängig von der Art des zerstäubten Lacks beim Einsatz in einer Lackieranlage, der verwendeten Applikation sowie der vorherrschenden Luftkonditionen kann es durchaus sinnvoll sein, zur Erzielung einer höheren Aufnahmekapazität den rohgasseitigen Strömungsquerschnitt und damit das Aufnahmevolumen für abgeschiedene Partikel, auf Kosten der Filterfläche zu vergrößern. Hierfür ist gemäß dem vorgeschlagenen Filtermodulaufbau lediglich die Ausstanzung der Stützstruktur 14 anzupassen. Anstatt von drei U-Profilen können dann beispielsweise lediglich zwei U-Profile pro Filtermodul 10 verwendet werden. Filtermodule 10 mit vergrößertem rohgasseitigem Strömungsquerschnitt eignen sich insbesondere bei Partikeln, welche auf der Filterlage 50 trocken auftreffen bzw. schnell abtrocknen und/oder sich auf der Filterlage 50 aufbauen bzw. aufblähen und dadurch vergleichsweise rasch den rohgasseitigen Strömungsquerschnitt verblocken.

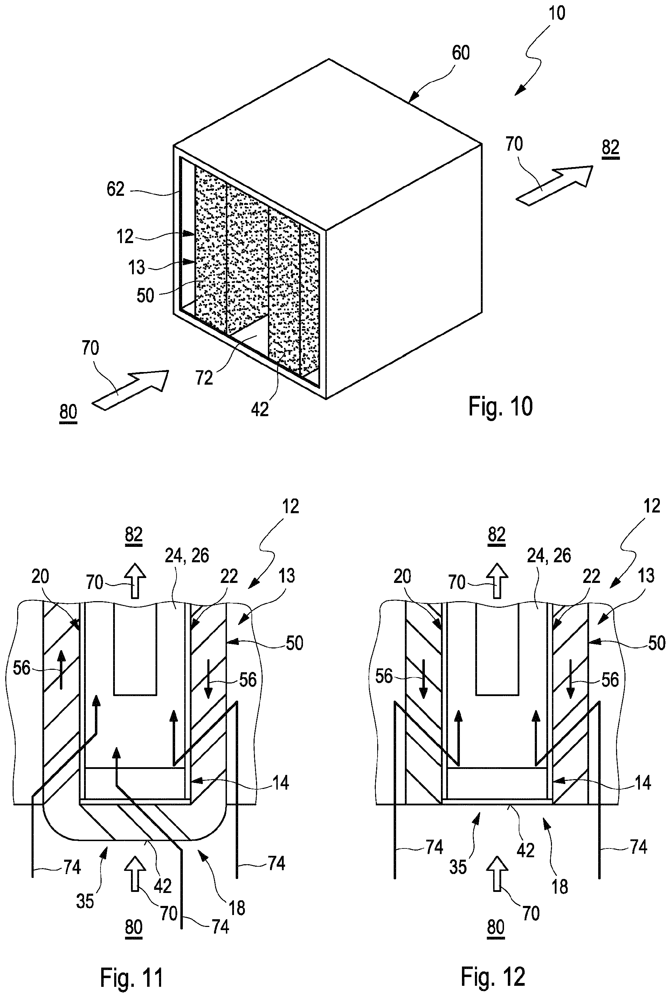

So ist in Figur 9 beispielsweise ein Filtermodul 10 nach einem Ausführungsbeispiel der Erfindung mit einem Filterstrukturkörper 12 aus drei U-Profilen in isometrischer Ansicht dargestellt, während in Figur 10 ein Filtermodul 10 mit einem Filterstrukturkörper 12 aus zwei U-Profilen in isometrischer Ansicht dargestellt ist. Deutlich ist bei dem Filtermodul 10 in Figur 10 der vergrößerte Strömungsquerschnitt 72 als Freiraum zwischen den U-Profilen der Segmente 18 zu erkennen.

Alternativ kann es aber durchaus auch sinnvoll sein, die Filterfläche im Vergleich zu einer Basisversion weiter zu vergrößern und dementsprechend den rohgasseitigen und/oder den reingasseitigen Strömungsquerschnitt 72 zu reduzieren.

Die Filterlage 50 kann je nach verwendetem Material mit einer strömungsmäßig bevorzugten Oberflächenausrichtung 56 ausgebildet sein. Abhängig vom Aufbau der verwendeten Filterlage 50, wie Faserfilter oder Papiergelegefilter, kann es zur Verbesserung der Filtereigenschaften wie Abscheiderate und Aufnahmekapazität deshalb durchaus vorteilhaft sein, die Filterlage 50 beispielsweise immer im Gegenstrom zu deren Oberflächenausrichtung anzuströmen. Bei Verwendung einer etwa das U-Profil durchgängig umlaufenden Faserfiltermatte ist dies jedoch nicht möglich, wie in Figur 11 dargestellt. In Figur 11 ist ein Teil eines U-Profils eines Filterstrukturkörpers 10 nach einem Ausführungsbeispiel der Erfindung mit einer durchgehenden Filterlage 50 in Draufsicht dargestellt. Markiert ist in der Filterlage 50 durch Schraffur die Oberflächenausrichtung 56, die auf der einen Segmentflachseite 20 in Strömungsrichtung 70 und auf der anderen Segmentflachseite 22 entgegen der Strömungsrichtung 70 ausgerichtet ist. Dazu sind die Strömungspfade 74 von in Strömungsrichtung 70 auf die Stirnfläche 42 auftreffenden Partikeln dargestellt. Man erkennt, dass die Strömungspfade 74 je nach durchströmtem Segment 18 des U-Profils durchaus unterschiedlich sind, wodurch sich ein inhomogenes Strömungsprofil der durch den Filterstrukturkörper 12 geleiteten Gasströmung ergibt.

Für derartige Filterlagen 50 wird daher beispielsweise vorgeschlagen, diese nicht an einem Stück fortlaufend bandförmig auf der Stützstruktur 14 zu fixieren, sondern stattdessen in mehrere Teile zu untergliedern und stückweise auf die Segmente 18 aufzubringen. So kann die Filterlage 50 zwischen Segmenten 18 unterbrochen sein. Dabei kann die Oberflächenausrichtung 56 entsprechend der optimalen Anströmung bei der Montage berücksichtigt werden, indem die Oberflächenausrichtung 56 beispielsweise segmentweise alternierend gewählt wird.

Figur 12 zeigt dazu einen Teil eines U-Profils eines Filterstrukturkörpers 10 nach einem Ausführungsbeispiel der Erfindung mit einer im Verbindungsbereich 34 unterbrochenen Filterlage 50 in Draufsicht. Die Filterlage 50 weist so auf nächstbenachbarten Segmentflachseiten 20, 22 eine segmentweise strömungsmäßig alternierende Oberflächenausrichtung 56 der Filterlage 50 auf. Die Strömungspfade 74 der in Strömungsrichtung 70 auf die Stirnfläche 42 auftreffenden Partikel sind zur Verdeutlichung des Effekts dargestellt. Um den erwünschten Effekt zu erzielen, sollte die durch den Verbindungsbereich 34 gebildete Stirnfläche 42 für die Rohgasströmung undurchlässig ausgebildet sein.

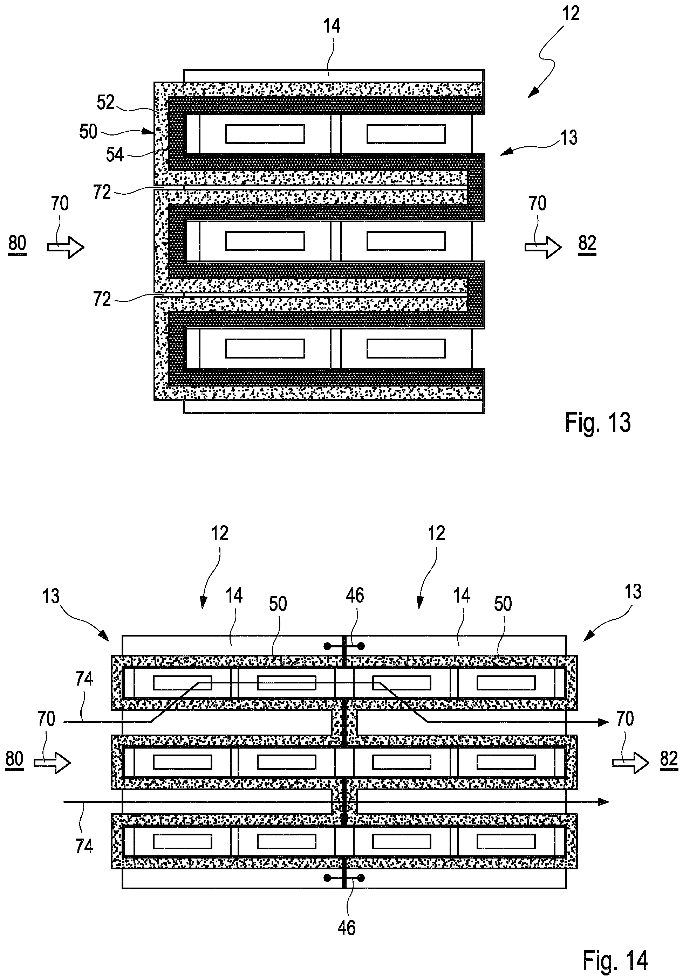

Zur Anpassung des im Filtermodul 10 eingesetzten Filterstrukturkörpers 12 an die abzuscheidenden Partikel kann einerseits der Filterstrukturkörper 12 selbst verändert werden. Alternativ können bei Bedarf mehrere verschiedenartige Filterlagenschichten hintereinander angeordnet und anschließend gemeinsam auf der Stützstruktur 14 fixiert werden. Aufgrund des begrenzten rohgasseitigen freien Strömungsquerschnitts ist die Gesamtdicke der Filterlagenschichten begrenzt. Zur Verdeutlichung ist in Figur 13 ein Filterstrukturkörper 12 nach einem Ausführungsbeispiel der Erfindung mit einer Filterlage 50 aus zwei Filterlagenschichten 52, 54 mit großer Dicke in Draufsicht dargestellt. Dabei wird deutlich, dass mit zunehmender Gesamtfilterlagendicke der rohgasseitige Strömungsquerschnitt 72 geringer wird. Im Verlauf der Partikelabscheidung können diese kleine Öffnungen verblocken, so dass sinnvollerweise ein Kompromiss zwischen Dicke der Filterlagenschichten 52, 54 und dem freien Strömungsquerschnitt 72 zu finden ist.

Insbesondere wenn die Partikelabscheidung hauptsächlich in der Tiefe der Filterlage 50 (Tiefenfilter) anstatt an der Oberfläche stattfindet, ist die Aufnahmekapazität des Filtermoduls 10 direkt von der Dicke der Filterlage 50 abhängig. Um eine hohe Dicke der Filterlage 50 und gleichzeitig einen ausreichend breiten rohgasseitigen Strömungsquerschnitt 72 zu erreichen wird deshalb vorgeschlagen, einen zweiten Filterstrukturkörper 12 des Filtermoduls 10 spiegelsymmetrisch zu ihrer Kontaktfläche, also um 180° um die Hochachse des Filterstrukturkörpers 12 gedreht, unmittelbar an die Austrittsseite des ersten Filterstrukturkörpers 12 anzuschließen. Falls erforderlich können die beiden Filterstrukturkörper 12 vor der Montage in dem äußeren Rahmen 60 miteinander über Verbindungsteile 46, beispielsweise Klammern verbunden werden.

Figur 14 zeigt dazu zwei hintereinander angeordnete Filterstrukturkörper 12 nach einem Ausführungsbeispiel der Erfindung mit entgegengesetzter Ausrichtung in Draufsicht. Zwei Filterstrukturkörper 12 sind in Strömungsrichtung 70, senkrecht zur Stapelrichtung 44 der Segmente 18, in Serie angeordnet. Dadurch sind die zwei Filterstrukturkörper 12 in Strömungsrichtung 70 hintereinander auch mit zueinander entgegengesetzter Oberflächenausrichtung 56 der Filterlagen 50 ausgerichtet. Die Filterstrukturkörper 12 sind über die Verbindungsteile 46 in den Randsegmenten verbunden und können so nach der Montage gemeinsam in einen äußeren Rahmen 60 eingebaut werden. Zur Verdeutlichung des Effekts sind die Strömungspfade 74 der in Strömungsrichtung 70 auf die Stirnfläche 42 auftreffenden Partikel dargestellt. Man erkennt, dass ein Strömungspfad 74 des Gasstroms direkt durch die beiden Stirnflächen 42 der aneinander liegenden U-Profile in gerader Linie hindurchtritt, während ein anderer Strömungspfad 74 des Gasstroms durch die in Strömungsrichtung vordere Filterlage 50 in das U-Profil des vorderen Filterstrukturkörpers 12 eintritt und das dahinterliegende U-Profil des in Strömungsrichtung folgenden Filterstrukturkörpers 12 durch die Filterlage 50 hindurch wieder verlässt.

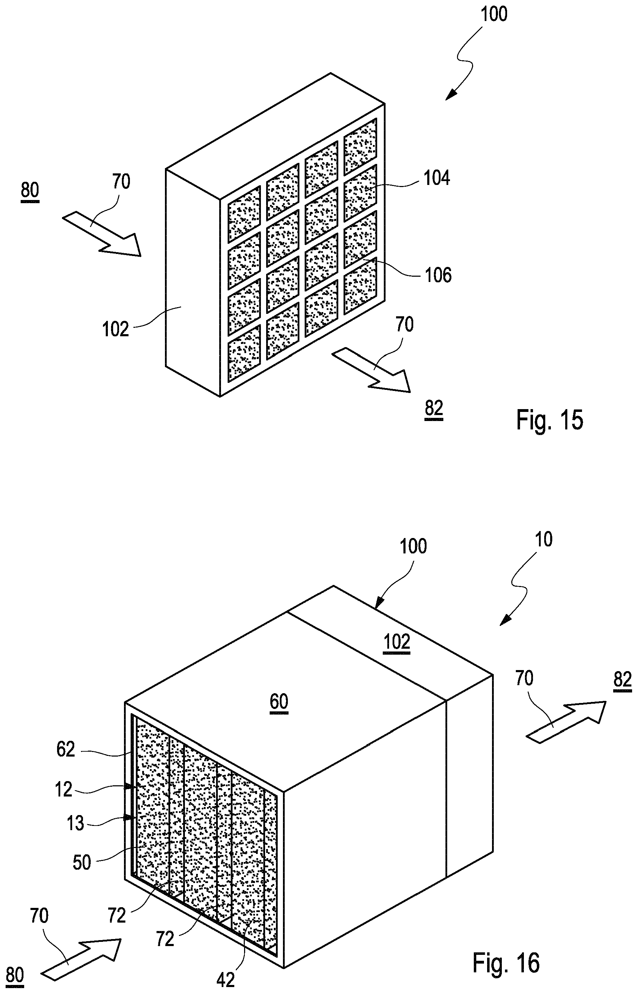

Figur 15 zeigt eine Nachfilterstufe 100 für ein oder mehrere Filtermodule als Hauptfilterstufe, und Figur 16 zeigt eine Ausgestaltung einer Verschaltung von Filtermodul 10 als Hauptfilterstufe und nachgeschalteter Nachfilterstufe 100. In diesem Ausführungsbeispiel ist ein Filtermodul 10 mit einer Nachfilterstufe 100 dargestellt. In anderen Ausführungsbeispielen können ein oder mehrere Filtermodule 10 und/oder ein oder mehrere Nachfilterstufen 100 vorgesehen sein.

In der Nachfilterstufe 100 ist ein Filtermedium 104 in einem separaten äußeren Rahmen 102 installiert. Das Filtermedium 104 kann vorzugsweise filternde Abscheider umfassen, insbesondere Faserfilter wie Wirrfasermatten oder Kunstvliese.

Das Filtermedium 104 der Nachfilterstufe 100 ist flächig und quer zur Anströmrichtung in den äußeren Rahmen 102 eingebaut bzw. eingelegt. Abhängig von der Beschaffenheit des Filtermaterials kann es zu dessen Halterung ausreichend sein, wenn der äußere Rahmen 102 an der Ausströmseite (Reingasseite) ein Gitter 106 aufweist. Auf den Einsatz einer Stützstruktur analog zum Filtermodul 10 der Hauptfilterstufe kann in diesem Fall gänzlich verzichtet werden.

Sofern eine Halterung des flächig eingebauten Filtermediums 104 erforderlich ist, kann beispielsweise ein rohgasseitiger Rahmen oder aber Haltestifte oder Halteklammern, welche am reingasseitigen Gitter 106 befestigt werden, zur Befestigung des Filtermediums 104 eingesetzt werden. Beim flachen Einbau des Filtermediums 104 in die Nachfilterstufe 100 kann ein gewisser Abstand zwischen der Ausströmseite des Filtermoduls 10 und der Einströmseite der Nachfilterstufe 100 vorgesehen sein. Der Abstand kann durch einen, im Vergleich zum Filtermedium 104, tieferen äußeren Rahmen 102 der Nachfilterstufe 100 realisiert werden. Dadurch ergibt sich der Vorteil, dass zwischen dem Ausströmpunkt aus der vorgeschalteten Hauptfilterstufe und dem Einströmpunkt in das Filtermedium 104 der Nachfilterstufe 100 ein Freiraum ausgebildet ist, in welchem sich die Luftströmung vergleichmäßigen kann. Dadurch wird die Filterfläche der Nachfilterstufe 100 entsprechend gleichmäßig belastet.

In einer bildlich nicht dargestellten Ausgestaltung kann das Filtermedium 104 analog zum Filterstrukturkörper 12 des Filtermoduls 10 ausgestaltet und im Rahmen 102 angeordnet sein und eine auf einer Stützstruktur angeordnete Filterlage aufweisen. In diesem Fall kann der äußere Rahmen 102 der Nachfilterstufe 100 im Vergleich zum Filterstrukturkörper in Strömungsrichtung 70 einige Zentimeter tiefer angeordnet sein. Die Stützstruktur der Nachfilterstufe 100 kann dann im äußeren Rahmen 102 in Strömungsrichtung 70 Richtung der Ausströmseite, d.h. der Reingasseite, verschoben werden. Dadurch ergibt sich der Vorteil, dass zwischen dem Ausströmpunkt aus der vorgeschalteten Hauptfilterstufe und dem Einströmpunkt in das Filtermedium 104 der Nachfilterstufe 100 ein Freiraum ausgebildet ist, in welchem sich die Luftströmung vergleichmäßigen kann. Dadurch wird die Filterfläche der Nachfilterstufe 100 entsprechend gleichmäßig belastet.

Die Höhe als auch die Breite der äußeren Rahmen der Nachfilterstufe 100 ist vorzugsweise identisch zu den Werten des Filtermoduls 10. Dadurch kann die Nachfilterstufe100 zusammen mit dem Filtermodul 10 in eine nicht dargestellte Filtermodulaufnahme eingebaut werden. Dabei können die Filterstufen einzeln, d.h. nacheinander, oder aber gemeinsam als ein Bauteil in die Filtermodulaufnahme installiert werden. Dazu können die Filterstufen vor dem Einbau miteinander, beispielsweise mit Klebeband, idealerweise luftdicht verbunden werden.

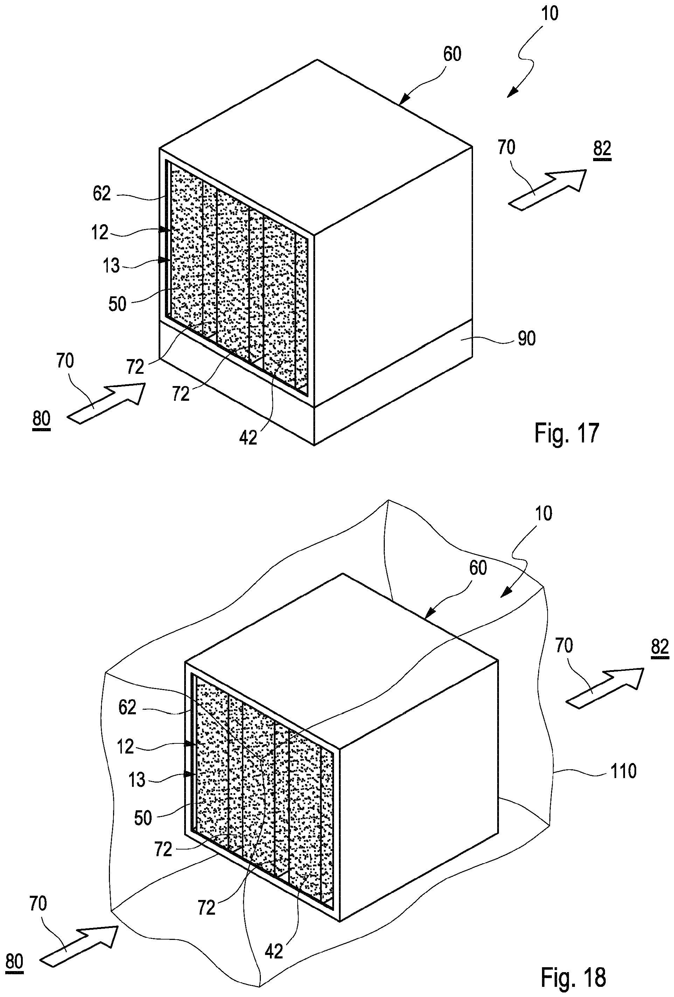

Figur 17 zeigt eine Ausgestaltung, bei der ein Filtermodul 10 mit einer Auffangeinrichtung 90 in Form einer Wanne gekoppelt ist, die an der Unterseite des Filtermoduls 10 angeordnet ist.

Die Auffangeinrichtung 90 wird nach dem Zusammenbau des Filtermoduls 10 über die Unterseite des äußeren Rahmens 60 gestülpt. Optional können mehrere Filtermodule 10, gegebenenfalls auch mit etwaigen Nachfilterstufen, in eine gemeinsame Auffangeinrichtung 90 eingesetzt werden. Alternativ kann die Auffangeinrichtung 90 auch in das Filtermodul 10 integriert sein, d.h. innerhalb des äußeren Rahmens 60 angeordnet sein.

Weicht im Betrieb des Filtermoduls 10 beispielsweise der Boden des Rahmens 60 aufgrund sich ansammelnden fließfähigen Lacks durch, kann dieser in der Auffangeinrichtung 90 aufgefangen werden und das Filtermodul 10 noch weiter betrieben werden. Optional können im Boden des Rahmens 60 auch Schwachstellen vorgesehen sein, die zunächst geschlossen sind und bei Vorhandensein von fließfähigem Lack definiert zur Auffangeinrichtung 90 hin öffnen und den fließfähigen Lack aus dem Rahmen 60 abführen.

Die Auffangeinrichtung 90 besteht dabei aus einem ausreichend reißfesten, flüssigkeitsbeständigen Material, das vorzugsweise so dünn ist, dass die Außenabmessungen des Filtermoduls 10 nicht wesentlich verändert werden. Vorzugsweise besteht die Auffangeinrichtung 90 aus wasserfest beschichtetem Papiermaterial oder Kartonmaterial, beispielsweise einseitig oder beidseitig mit Polyethylen beschichtetem Kartonmaterial, oder aus dünnem Kunststoff. Neben der Ausführung in Form einer formstabilen Wanne, kann optional auch eine Realisierung der Wannenfunktion durch den Einsatz von geeignet geformten und angebrachten Tüten, Säcken oder Folienzuschnitten vorgesehen sein. In einer bevorzugten Ausführungsform kommt eine einteilige Wanne zum Einsatz, die durch Faltung aus einem rechteckigen oder quadratischen Zuschnitt des Wannenmaterials in bekannter Weise so geformt wird, dass sie eine lückenlos geschlossene, den äußeren Rahmen 60 im Bereich seiner Unterseite eng umschließende Form aufweist.

**In** einer weiteren, nicht dargestellten Ausführungsform kann die Auffangeinrichtung 90 auch auf der Anströmseite des Filtermoduls 10 über den äußeren Rahmen 60 hinaus überstehend ausgeführt sein, so dass an der Anströmseite herablaufender Lack sowie von oberhalb des Filtermoduls 10 herabtropfender oder herablaufender Lack aufgefangen und das Speichervolumen des Filtermoduls 10 nochmals vergrößert wird.

**In** einer weiteren, nicht dargestellten Ausführungsform kann die Auffangeinrichtung 90 mit einem Überlauf oder Ablauf ausgeführt sein, durch den noch gut fließfähiger abgeschiedener Lack an definierter Stelle aus dem Filtermodul 10 abgeleitet wird. Der Ablauf kann dabei in ein unterhalb angeordnetes Filtermodul oder einen unterhalb angeordneten Sammelbehälter erfolgen. Auch eine direkte Ausschleusung des abfließenden Lacks aus der Lackierkabine durch einen Siphon, eine Pumpe, Schnecke oder sonstige Fördereinrichtung ist denkbar. Bevorzugt kommt bei dieser Ausführungsform eine auf der Anströmseite über den äußeren Filterrahmen hinaus überstehende Wanne zum Einsatz, wobei der Ablauf durch ein Loch im Boden des überstehenden Wannenteils realisiert wird.

Figur 18 zeigt eine Anordnung aus einem Filtermodul 10 und einer Schutzhülle 110, die insbesondere zur einfachen Demontage des Filtermoduls, aber auch zum Schutz einer Filtermodulaufnahme vor Verschmutzung vorteilhaft ist. Zwar ist diese Anordnung für ein Filtermodul 10 beschrieben, es versteht sich jedoch, dass auch eine Mehrzahl von Filtermodulen 10 wie auch etwaige Nachfilterstufen in einer einzelnen Schutzhülle 110 vorgesehen sein können.

Die Schutzhülle 110 ist nach der Montage des Filtermoduls 10 in der nicht dargestellten Filtermodulaufnahme sowohl auf der Reingasseite 82 als auch auf der Rohgasseite 80 offen. Die Schutzhülle 110 kann vorzugsweise vor der Demontage des gesättigten Filtermoduls 10 an der Rohgasseite 82 verschlossen werden. Durch Ziehen am Verschluss kann die Schutzhülle 110 mitsamt dem Filtermodul 10 aus der Filtermodulaufnahme entfernt werden. Optional kann auf der Reingasseite 82 an der Schutzhülle 110 ein Steg zur Kraftübertragung auf das Filtermodul 10 vorgesehen sein.

Vorteilhaft kann die Schutzhülle 110 aus einem stabilen und reißfesten Gewebematerial, z.B. aus Kunststoffgewebe, gebildet sein. Sind mehrere Komponenten wie Filtermodule 10 und/oder Nachfilterstufen in der Schutzhülle 110 vorgesehen, können diese beispielweise mit Palettenbändern gebündelt und nach deren Sättigung an diesen Bändern gemeinsam mit der Schutzhülle 110 aus der Filtermodulaufnahme gezogen werden.

Die Schutzhülle 110 kann zum einmaligen Gebrauch oder auch zur Mehrfachverwendung vorgesehen sein. Im Falle von einmalig verwendbaren Schutzhüllen 110 können Filtermodule 10 bereits in der Schutzhülle 110 an die Filtermodulaufnahme angeliefert werden.

Bevorzugt werden mehrere Filtermodule 10 gemeinsam in eine Schutzhülle 110 eingesetzt. Zur gleichmäßigen Verteilung des Gewichts werden bei vertikal übereinander angeordneten Filtermodulen 10 horizontale Trennelemente, beispielsweise aus Metall, Holz oder Karton, eingesetzt. Sofern mehrere vertikale Reihen von Filtermodulen 10 in eine Schutzhülle 110 integriert werden, können zusätzlich auch vertikale Trennelemente vorgesehen sein. Gemeinsam mit den horizontalen Trennelementen bilden diese dann vorzugsweise ein Versteifungskreuz so aus, dass die übereinander gestapelten Filtermodule 10 auch bei zunehmender Sättigung eine stabile Einheit bilden.

## Patentansprüche

1. Filtermodul (10) zum Abscheiden von Verunreinigungen aus einem Verunreinigungen enthaltenden Rohgasstrom, umfassend
- einen dreidimensionalen Filterstrukturkörper (12), durch welchen der Rohgasstrom leitbar ist, und welcher eine in Segmente (18) unterteilte Stützstruktur (14) und eine darauf angeordnete,
insbesondere fixierte, Filterlage (50) aufweist, wobei wenigstens zwei der Segmente (18) über einen Verbindungsbereich (34, 35) zusammenhängend ausgebildet sind und
- einen äußeren Rahmen (60) zur Aufnahme des Filterstrukturkörpers (12), wobei die Segmente (18) mit der darauf angeordneten Filterlage (50) in einer Stapelrichtung (44) mit ihren Segmentflachseiten (20, 22) aufeinanderfolgend angeordnet sind,
wobei der Filterstrukturkörper (12) kraftschlüssig in dem äußeren Rahmen (60) fixiert ist,
wobei die Segmente (18) quer zu den Segmentflachseiten (20, 22) wegklappbare Abstands- und/oder Versteifungselemente (28, 30, 32) und/oder aus den Segmentflachseiten (20, 22) herausklappbare Abstands- und/oder Versteifungselemente (24, 26) aufweisen.

2. Filtermodul nach Anspruch 1, wobei der Filterstrukturkörper (12) eine in eigensteife Segmente (18) unterteilte Filterstruktur (13) umfasst, die eine eigensteife Stützstruktur (14) und eine darauf angeordnete, insbesondere fixierte, Filterlage (50) aufweist.

3. Filtermodul nach Anspruch 1 oder 2, wobei der Filterstrukturkörper (12) verbindungsmittelfrei in dem äußeren Rahmen (60) fixiert ist.

4. Filtermodul nach einem der vorhergehenden Ansprüche, wobei wenigstens zwei der Segmente (18) über einen Verbindungsbereich (34, 35) zusammenhängend ausgebildet sind und wobei in Stapelrichtung (44) angeordnet wenigstens zwei der aufeinanderfolgenden Segmente (18) mit ihren Segmentflachseiten (20, 22) Schenkel eines U-Profils oder V-Profils bilden.

5. Filtermodul nach einem der vorhergehenden Ansprüche , wobei zueinander weisende Abstands- und/oder Versteifungselemente (24, 26, 28, 30, 32) benachbarter Segmente (18) wenigstens teilweise miteinander verbindbar, insbesondere verrastbar oder verklemmbar, sind.

6. Filtermodul nach Anspruch 5, wobei zueinander weisende Abstands- und/oder Versteifungselemente (24) benachbarter Segmente (18) wenigstens ein Rastelement (90) aufweisen, welches in einem bestimmungsgemäß herausgeklappten Zustand mit einem Rastgegenelement (92) eines gegenüber liegenden Abstands- und/oder Versteifungselementes (26) eines benachbarten Segments (18) verrastbar ist.

7. Filtermodul nach einem der vorhergehenden Ansprüche, wobei die Filterlage (50) mit einer strömungsmäßig bevorzugten Oberflächenausrichtung (56) ausgebildet ist.

8. Filtermodul nach einem der vorhergehenden Ansprüche, wobei die Filterlage (50) auf nächstbenachbarten Segmentflachseiten (20, 22) eine strömungsmäßig alternierende Oberflächenausrichtung (56) der Filterlage (50) aufweist.

9. Filtermodul nach einem der vorhergehenden Ansprüche, wobei die Filterlage (50) zwischen Segmenten (18) unterbrochen ist.

10. Filtermodul nach einem der vorhergehenden Ansprüche, wobei die Filterlage (50) aus wenigstens zwei Filterlagenschichten (52, 54) gebildet ist.

11. Filtermodul nach einem der vorhergehenden Ansprüche, wobei die Stützstruktur (14) aus Pappkarton gebildet ist.

12. Filtermodul nach einem der vorhergehenden Ansprüche, wobei zwei oder mehr Filterstrukturkörper (12) in Strömungsrichtung (70) quer, insbesondere senkrecht, zur Stapelrichtung (44) in Serie angeordnet sind.

13. Filtermodul nach Anspruch 12, wobei die zwei oder mehr Filterstrukturkörper (12) in Strömungsrichtung (70) hintereinander spiegelsymmetrisch zur ihrer Kontaktfläche angeordnet sind.

14. Filtermodul nach einem der vorhergehenden Ansprüche , wobei eine Auffangeinrichtung (90) vorgesehen ist, die insbesondere aus reißfestem, flüssigkeitsbeständigem Material gebildet ist.

15. Filtermodul nach Anspruch 14, wobei die Auffangeinrichtung (90) als einteilige Wanne ausgebildet ist, die insbesondere durch Faltung in eine vorgesehene Geometrie gebracht werden kann.

## Claims

1. Filter module (10) for separating impurities from a raw gas stream containing impurities, comprising
- a three-dimensional filter structure body (12) by way of which the raw gas stream is able to be directed and which comprises a support structure (14) divided into segments (18) and disposed, in particular fixed, thereon a filter layer (50), wherein at least two of the segments (18) are formed so as to be contiguous by way of a connecting region (34, 35); and
- an outer frame (60) for receiving the filter structure body (12), wherein the segments (18) having the filter layer (50) disposed thereon, by way of their segment flat sides (20, 22), are disposed successively in a stacking direction (44),
wherein the filter structure body (12) is fixed in a force-fitting manner in the outer frame (60),
wherein the segments (18) have
spacer and/or reinforcement elements (28, 30, 32) which are able to be folded away transversely in relation to the segment flat sides (20, 22), and/or spacer and/or reinforcement elements (24, 26) which are able to be folded out of the segment flat sides (20, 22).

2. Filter module according to Claim 1, wherein the filter structure body (12) comprises a filter structure (13) which is divided into inherently stiff segments (18) and has an inherently stiff support structure (14) and a filter layer (50) disposed, in particular fixed, thereon.

3. Filter module according to Claim 1 or 2, wherein the filter structure body (12) is fixed in the outer frame (60) without connecting means.

4. Filter module according to one of the preceding claims, wherein at least two of the segments (18) are formed so as to be contiguous across a connecting region (34, 35) and wherein at least two of the successive segments (18), disposed in the stacking direction (44), by way of their segment flat sides (20, 22) form legs of a U-profile or V-profile.

5. Filter module according to one of the preceding claims, wherein mutually facing spacer and/or reinforcement elements (24, 26, 28, 30, 32) of adjacent segments (18) are able to be at least partially connected, in particular latched or clamped, to one another.

6. Filter module according to Claim 5, wherein mutually facing spacer and/or reinforcement elements (24) of adjacent segments (18) have at least one latching element (90) which in a state folded out according to the intended use is able to be latched to a latching counter-element (92) of an opposite spacer and/or reinforcement element (26) of an adjacent segment (18).

7. Filter module according to one of the preceding claims, wherein the filter layer (50) is designed with a fluidically preferred surface orientation (56).

8. Filter module according to one of the preceding claims, wherein the filter layer (50) on closest adjacent segment flat sides (20, 22) has a fluidically alternating surface orientation (56) of the filter layer (50).

9. Filter module according to one of the preceding claims, wherein the filter layer (50) is interrupted between segments (18).

10. Filter module according to one of the preceding claims, wherein the filter layer (50) is formed from at least two filter layer tiers (52, 54).

11. Filter module according to one of the preceding claims, wherein the support structure (14) is formed from cardboard.

12. Filter module according to one of the preceding claims, wherein two or more filter structure bodies (12) are disposed in series in the flow direction (70) so as to be transverse, in particular perpendicular, to the stacking direction (44).

13. Filter module according to Claim 12, wherein the two or more filter structure bodies (12) are disposed behind one another in the flow direction (70) so as to be mirror-symmetrical in relation to their contact face.

14. Filter module according to one of the preceding claims, wherein provided is a containment device (90) which is formed in particular of tear-resistant, liquid-resistant material.

15. Filter module according to Claim 14, wherein the containment device (90) is formed as an integral tray which can be shaped to an envisaged geometry in particular by folding.

## Revendications

1. Module de filtration (10) pour séparer des impuretés d'un courant de gaz brut contenant des impuretés, comprenant
- un corps de structure de filtre tridimensionnel (12), à travers lequel le courant de gaz brut peut être conduit, et qui présente une structure de support (14) divisée en segments (18) et
une couche de filtration (50) agencée sur celle-ci, notamment fixée, au moins deux des segments (18) étant réalisés de manière contigüe par l'intermédiaire d'une zone de liaison (34, 35) et
- un cadre extérieur (60) destiné à recevoir le corps de structure de filtre (12), les segments (18) avec la couche de filtration (50) agencée sur ceux-ci étant agencés successivement dans une direction d'empilement (44) par leurs côtés plats de segment (20, 22),
le corps de structure de filtre (12) étant fixé par adhérence dans le cadre extérieur (60),
les segments (18) présentant
des éléments d'écartement et/ou de renforcement (28, 30, 32) pouvant être rabattus transversalement aux côtés plats de segment (20, 22) et/ou des éléments d'écartement et/ou de renforcement (24, 26) pouvant être déployés des côtés plats de segment (20, 22).

2. Module de filtration selon la revendication 1, dans lequel le corps de structure de filtre (12) comprend une structure de filtre (13) divisée en segments (18) à rigidité propre, qui présente une structure de support (14) à rigidité propre et une couche de filtration (50) agencée sur celle-ci, notamment fixée.

3. Module de filtration selon la revendication 1 ou 2, dans lequel le corps de structure de filtre (12) est fixé sans moyen de liaison dans le cadre extérieur (60).

4. Module de filtration selon l'une quelconque des revendications précédentes, dans lequel au moins deux des segments (18) sont réalisés de manière contiguë par l'intermédiaire d'une zone de liaison (34, 35) et dans lequel, agencés dans la direction d'empilement (44), au moins deux des segments (18) successifs forment, par leurs côtés plats de segment (20, 22), des branches d'un profilé en U ou d'un profilé en V.

5. Module de filtration selon l'une quelconque des revendications précédentes, dans lequel des éléments d'écartement et/ou de renforcement (24, 26, 28, 30, 32) orientés les uns vers les autres de segments (18) voisins peuvent être reliés au moins partiellement les uns aux autres, notamment peuvent être encliquetés ou bloqués.

6. Module de filtration selon la revendication 5, dans lequel des éléments d'écartement et/ou de renforcement (24) orientés les uns vers les autres de segments (18) voisins présentent au moins un élément d'encliquetage (90) qui, dans un état déployé conforme, peut être encliqueté avec un contre-élément d'encliquetage (92) d'un élément d'écartement et/ou de renforcement (26) situé en face d'un segment (18) voisin.

7. Module de filtration selon l'une quelconque des revendications précédentes, dans lequel la couche de filtration (50) est réalisée avec une orientation de surface (56) préférée du point de vue de l'écoulement.

8. Module de filtration selon l'une quelconque des revendications précédentes, dans lequel la couche de filtration (50) présente, sur des côtés plats de segment (20, 22) immédiatement voisins, une orientation de surface (56) de la couche de filtration (50) alternée du point de vue de l'écoulement.

9. Module de filtration selon l'une quelconque des revendications précédentes, dans lequel la couche de filtration (50) est interrompue entre des segments (18).

10. Module de filtration selon l'une quelconque des revendications précédentes, dans lequel la couche de filtration (50) est formée d'au moins deux strates de couches de filtration (52, 54).

11. Module de filtration selon l'une quelconque des revendications précédentes, dans lequel la structure de support (14) est formée de carton.

12. Module de filtration selon l'une quelconque des revendications précédentes, dans lequel deux ou plus de deux corps de structure de filtre (12) sont agencés en série dans la direction d'écoulement (70) transversalement, notamment perpendiculairement, à la direction d'empilement (44).

13. Module de filtration selon la revendication 12, dans lequel les deux ou plus de deux corps de structure de filtre (12) sont agencés l'un derrière l'autre dans la direction d'écoulement (70), avec une symétrie spéculaire par rapport à leur surface de contact.

14. Module de filtration selon l'une quelconque des revendications précédentes, dans lequel il est prévu un dispositif de collecte (90), qui est formé notamment d'un matériau résistant à la déchirure et aux liquides.

15. Module de filtration selon la revendication 14, dans lequel le dispositif de collecte (90) est réalisé sous la forme d'un bac d'une seule pièce, qui peut être mis dans une géométrie prévue, notamment par pliage.
